# EUROPEAN PATENT APPLICATION

(11) **EP 2 330 847 A1**
(43) Date of publication of application: **08.06.2011**
(21) Application number: 09817243.0
(22) Date of filing: 22.09.2009
(51) Int. Cl.: H04W 28/24

(54) **METHOD, SYSTEM AND APPARATUS FOR SERVICE NEGOTIATION**

(30) Priority: 27.09.2008 CN 200810148830
(71) Applicant: Huawei Technologies Co., Ltd., Shenzhen, Guangdong Province 518129 (CN)
(72) Inventor: SHI, Xiaomin, Longgang District 518129, Shenzhen (CN); LI, Yan, Longgang District 518129, Shenzhen (CN); TANG, Jie, Longgang District 518129, Shenzhen (CN); MA, Qifeng, Longgang District 518129, Shenzhen (CN); CHEN, Shan, Longgang District 518129, Shenzhen (CN); WANG, Huan, Longgang District 518129, Shenzhen (CN); CHANG, Heng, Longgang District 518129, Shenzhen (CN); LIU, Jianfeng, Longgang District 518129, Shenzhen (CN)
(74) Representative: Kreuz, Georg Maria
(86) International application number: PCT/CN2009/074106
(87) International publication number: WO 2010/037329

(57) **Abstract**

The present invention discloses a service negotiation method, system and device. The service negotiation method includes: obtaining a service negotiation request that contains multiple services; obtaining a requirement processing result of the multiple services according to the service negotiation request; and selecting a target service according to the requirement processing result, generating a service negotiation result corresponding to the service negotiation request, and returning the service negotiation result. The present invention enables the service network to support service negotiation under multiple service requirements and meets the needs of service interactions and the requirements of the negotiation requester. With the present invention, the success rate of service negotiation is increased and the user satisfaction is enhanced.

## Description

This application claims priority to Chinese Patent Application No. 200810148830.3, filed with the Chinese Patent Office on September 27, 2008 and entitled "Method, System, and Device for Service Negotiation", which is incorporated herein by reference in its entirety.

### FIELD OF THE INVENTION

The present invention relates to network communications technologies, and in particular, to a method, system, and device for service negotiation.

### BACKGROUND OF THE INVENTION

With the development of telecommunications network technologies and the increase of user requirements, the provision of services should be diversified. But, the interaction between services will hinder operators from further development of more complicated services when services are diversified to some extent. Users urgently need a complete service supply chain to take the place of independent service subsystems.

To meet the service management requirements, a common practice in the industry is to integrate all kinds of resources of an operator around a service center. All capabilities and resources of the network are uniformly abstracted and opened to upper-layer services. The interaction between different services and the management of services are realized by service network devices laid over the existing network. The service network manages and controls the service interaction, message routing, message detection, service combination, and service description through core devices including a service router, a service combination engine, and a service directory.

When services registered with the service network increase rapidly, the interaction and access between services are increasingly complicated. The users are also requiring a better service experience. Unreliable services with a poor user experience are criticized by the users. Issues like instability, unreliability of service access and nonsupport for personalization are exposed and become unavoidable in the use and management of services. Moreover, because sub-services that form a combined service may be unreliable and instable, the issue of a poor service experience is even more serious in the use of combined services. At present, services are available in great varieties and service requirements are also varied. The conventional way of controlling and managing the transport network no longer satisfies the requirements.

### SUMMARY OF THE INVENTION

Embodiments of the present invention provide a method, system, and device for service negotiation so that the service network supports service negotiation under varied service requirements.

For the above purpose, a service negotiation method includes:
obtaining a service negotiation request that contains multiple services;
obtaining a requirement processing result of the multiple services in response to the service negotiation request; and
selecting a target service according to the requirement processing result, generating a service negotiation result corresponding to the service negotiation request, and returning the service negotiation result.

A service requirement publishing method includes:
obtaining service requirement information of a target service and determining there is an unidentifiable service requirement in response to the service requirement information; and
publishing the unidentifiable service requirement

A service negotiation system includes a negotiation agent. The negotiation agent is configured to: obtain a service negotiation request that contains multiple services; obtain a requirement processing result of the multiple services according to the service negotiation request; and select a target service according to the requirement processing result, generate a service negotiation result corresponding to the service negotiation request, and return the service negotiation result.

A negotiation agent includes:
a negotiation request analyzing unit, configured to: obtain a service negotiation request that contains multiple services, and analyze the request to obtain a target service to be processed and a negotiation requirement;
a target service negotiating unit, configured to: request service requirement information of the target service from a home service router of the target service to be processed, and receive a requirement processing result returned by the home service router of the target service in response to the service requirement information of the target service; and
a negotiation result generating unit, configured to: select a target service according to the requirement processing result, generate a service negotiation result corresponding to the service negotiation request, and return the service negotiation result.

A service router includes:
a negotiation processing system, configured to: receive and process a service negotiation request of a target service and return a negotiation result in response to the service negotiation request.

A service combination engine includes a negotiation agent. The negotiation agent is configured to: obtain a service negotiation request that contains multiple services; obtain a requirement processing result of the multiple services according to the service negotiation request; and select a target service according to the requirement processing result, generate a service negotiation result corresponding to the service negotiation request, and return the service negotiation result.

A service router includes a negotiation agent. The negotiation agent is configured to: obtain a service negotiation request that contains multiple services; obtain a requirement processing result of the multiple services according to the service negotiation request; and select a target service according to the requirement processing result, generate a service negotiation result corresponding to the service negotiation request, and return the service negotiation result.

In the embodiments of the present invention, a negotiation agent receives the service negotiation request of a negotiation requester and negotiates with a service router according to the service negotiation request, and finally generates the service negotiation result and sends the result to the negotiation requester. This enables the service network to support service negotiation under multiple service requirements and meets the needs of service interactions and the requirements of the negotiation requester. Eventually, the present invention increases the success rate of service negotiation and enhances user satisfaction.

### BRIEF DESCRIPTION OF THE DRAWINGS

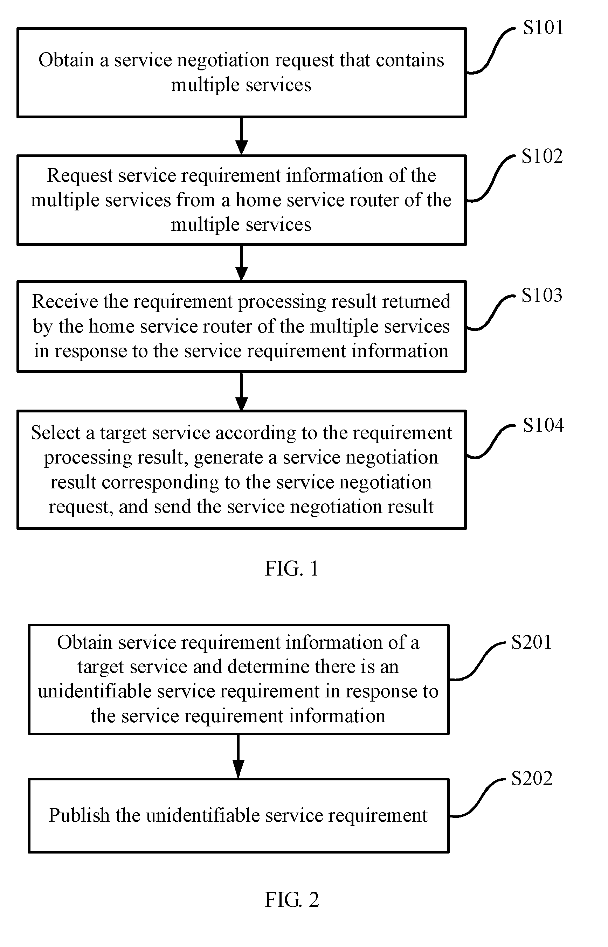

To better explain the technical solution of the present invention, the accompanying drawings required in the description of the embodiments of the present invention are briefly described. It is apparent that the accompanying drawings illustrate only some exemplary embodiments of the present invention. Those skilled in the art can derive other drawings from these drawings without any creative effort.
. FIG. 1 is a flowchart of a service negotiation method in an embodiment of the present invention;
. FIG. 2 is a flowchart of a service requirement publishing method in an embodiment of the present invention;
FIG. 3 illustrates a structure of a service negotiation system in an embodiment of the present invention;
FIG. 4 illustrates a structure of a negotiation agent in an embodiment of the present invention;
FIG. 5 illustrates a structure of a service router in an embodiment of the present invention;
FIG. 6 illustrates a structure of a registration center in an embodiment of the present invention;
FIG. 7 illustrates a structure of a service provider in an embodiment of the present invention;
FIGS. 8 is a flowchart of another service negotiation method in an embodiment of the present invention;
FIGS. 9 illustrates a procedure where a negotiation agent processes a service negotiation request according to an embodiment of the present invention;
FIGS. 10 illustrates a negotiation process of a service router in an embodiment of the present invention;
FIGS. 11 illustrates a procedure for publishing a new service requirement in an embodiment of the present invention;
FIGS. 12 illustrates another procedure for publishing a new service requirement in an embodiment of the present invention;
FIG. 13 illustrates port relations in an embodiment of the present invention; and
FIG. 14 is a flowchart of an exemplary embodiment of the present invention.

### DETAILED DESCRIPTION OF THE EMBODIMENTS

To better explain the technical solution of the present invention, the embodiments of the present invention are described in detail with reference to the accompanying drawings. It is apparent that the embodiments herein are only some exemplary embodiments of the present invention. Based on the embodiments herein, those skilled in the art can derive other embodiments without any creative effort and such other embodiments all fall into the scope of the present invention.

A service negotiation or selection method is provided in the embodiments of the present invention. The method is based on the service network to negotiate two or more candidate services at the service layer on multiple service requirements so as to select a target service. The multiple service requirements include but are not limited to service function information (such as interface description), dynamic requirements (such as the price and security level), and Quality of Service (QoS) of the bearer network (such as delay and stability). The service negotiation method provided in the embodiments of the present invention is capable of meeting dynamic service requirements. The embodiments of the present invention also support an unidentifiable service requirement and meet the service requirements of diversified services.

FIG. 1 is the flowchart of a service negotiation method in an embodiment of the present invention. As shown in FIG. 1, the service negotiation method includes the following steps:
Step S101: Obtain a service negotiation request containing multiple services.
   In the embodiment of the present invention, a negotiation agent receives the service negotiation request sent by a negotiation requester. The service negotiation request carries the service requirement information of multiple services.
Step S102: Request the service requirement information of the multiple services from a home service router of the multiple services.
Step S103: Receive the requirement processing result returned by the home service router of the multiple services in response to the service requirement information.

The home service router of the multiple services may return the requirement processing result in response to the service requirement information as follows:

The home service router of the multiple services determines function devices to be queried in response to the service requirement information of the multiple services and send a requirement query request that carries the service requirement information to the function devices. The home service router receives the requirement query result returned by the function devices in response to the requirement query request, generate a requirement processing result according to the requirement query result, and send the requirement processing result to the negotiation agent.

In the embodiment of the present invention, the home service router of the multiple services determines the function devices to be queried and send the requirement query request that carries the service requirement information to the function devices as follows:
the home service router sends the requirement query request to a bearer network QoS manager and query QoS information between the home service router of the multiple services and the service bearer network; and/or
the home service router sends the requirement query request to a service directory to query service function information, where the service function information includes service provider information, service category information or service interface description information; and/or
the home service router sends the requirement query request to a registration center to query service dynamic information, where the service dynamic information includes the specific numeric result corresponding to the service requirement or the information for querying ports corresponding to the service requirement.

When the service dynamic information queried is the information for querying ports corresponding to the service requirement, after the home service router of the multiple services query the registration center for the service dynamic information, they may use the related query port of the service provider to query the specific numeric result corresponding to the service requirement according to the information for querying ports.

Step S104: Select a target service according to the requirement processing result, generate a service negotiation result corresponding to the service negotiation request, and return the service negotiation result.

After receiving the requirement processing result returned by the home service router of the multiple services, the negotiation agent selects a target service according to the requirement processing result, generates a service negotiation result corresponding to the received service negotiation request, and sends the service negotiation result to the negotiation requester.

In another embodiment of the present invention, the negotiation agent obtains the target service that need to be processed from the service negotiation request, and sends a target service negotiation request to the home service router of the multiple services, requesting service requirement information of a target service to be processed. The home service router of the target service to be processed determines function devices to be queried in response to the service requirement information of the target service and send a requirement query request that carries the service requirement information to the function devices. Then the home service router of the target service to be processed receives requirement processing results returned by the function devices in response to the requirement query request, generate a target service negotiation result corresponding to the target service negotiation request according to the requirement processing result, and send the target service negotiation result to the negotiation agent. Then, the negotiation agent selects a target service according to the target service negotiation result and generates a service negotiation result corresponding to the service negotiation request.

In the embodiment of the present invention, the home service router of the multiple services is capable of determining there is an unidentifiable service requirement according to the requirement processing result returned by the function devices, and publishing the unidentifiable service requirement.

In the embodiment of the present invention, a service router may be a prior service router without any functional change and only has the basic function of processing message routing. In the embodiment of the present invention, all functions of the service router are processed by the negotiation agent. Specifically, the negotiation agent obtains the service negotiation request that contains multiple services, obtains the service requirement information of the multiple services according to the service negotiation request, and obtains the requirement processing result in response to the service requirement information of the multiple services. Then, the negotiation agent selects a target service according to the requirement processing result, generates a service negotiation result corresponding to the service negotiation result, and sends the service negotiation result to the negotiation requester.

In addition, in the embodiment of the present invention, the functions of the registration center may be integrated into the existing service router to make the service router become an enhanced service router. In this case, the service dynamic information can be queried on the service router that integrates the functions of the registration center.

In the embodiment of the present invention, the service negotiation request includes one or more of the following items:
(a) service network address or service identifier of the multiple services, according to which the negotiation agent routes the negotiation request to the home service router of the multiple services;
(b) service requirement information of the multiple services, according to which the negotiation agent obtains the related service requirements of the multiple services;
(c) requirement corresponding to the target service selection, according to which the negotiation agent selects the target service; and
(d) requirement corresponding to the negotiation process, according to which the negotiation agent controls the negotiation process.

The service negotiation result includes one or more of the following items:
(a) service network address or service identifier of the target service, which is sent by the negotiation agent to the negotiation requester; and
(b) negotiation log, including the total processing time of the negotiation process or a negotiation policy that is used.

The target service negotiation request includes one or more of the following items:
(a) service network address or service identifier of the target service to be processed, according to which the service router routes the target service negotiation request to the home service router of the target service to be processed;
(b) service requirement information of the target service to be processed, according to which the service router determines the function devices to be queried;
(c) requirement corresponding to the processing of the target service negotiation result, according to which the service router processes the target service negotiation result; and
(d) requirement corresponding to the target service negotiation process, according to which the service router controls the negotiation process.

The target service negotiation result includes one or more of the following items:
(a) negotiation result identifier, which indicates the negotiation result and the information corresponding to the negotiation result, and according to which the negotiation agent determines whether the service requirements are met;
(b) negotiation log, including the negotiation processing time and the identifiers of the queried function devices; and
(c) specific numeric values corresponding to the service requirements.

According to the foregoing service negotiation method, the negotiation agent receives the service negotiation request of the negotiation requester and negotiates with the service router according to the service negotiation request, and finally generates the service negotiation result and sends the result to the negotiation requester. This enables the service network to support service negotiation under multiple service requirements and meets the needs of service interactions and the requirements of the negotiation requester. Therefore, the method increases the success rate of service negotiation and enhances user satisfaction.

FIG. 2 is a flowchart of a service requirement publishing method in an embodiment of the present invention. As shown in FIG. 2, the service requirement publishing method includes the following steps:
Step S201: Obtain service requirement information of a target service and determine there is an unidentifiable service requirement in response to the service requirement information.

The determining there is an unidentifiable service requirement specifically includes:
querying the service requirements that are supported by a home service router of the target service and determining there is an unidentifiable service requirement according to the query result; or
determining a function device to be queried in response to the service requirement information and sending a requirement query request that carries the service requirement information to the determined function device, receiving the requirement query result retuned by the determined function device in response to the requirement query request, and determining there is an unidentifiable service requirement according to the requirement query result.

Step S202: Publish the unidentifiable service requirement. Specifically:

The home service router of the target service publishes the unidentifiable service requirement to the service router or the registration center corresponding to the service router so that the service provider obtains the unidentifiable service requirement corresponding to the service; the home service router of the target service also receives from the service provider a result that is generated by the service provider in response to the unidentifiable service requirement; then the home service router of the target service updates the result to the service router or the registration center.

Or, the home service router of the target service queries the registration center, obtains a requirement notification port provided when a service is registrated, and notifies the service provider of the unidentifiable service requirement by using the requirement notification port; the home service router also receives from the service provider the result that is generated by the service provider in response to the unidentifiable service requirement; then the home service router updates the result to the service router or the registration center.

The result includes a specific numeric value corresponding to the unidentifiable service requirement or information for querying ports corresponding to the unidentifiable service requirement.

In the foregoing service requirement publishing method, the service router publishes service requirements. Therefore, service requirements that are unidentifiable at the beginning can be detected and identified later, and thereby, service negotiation need not be limited to specific service requirements.

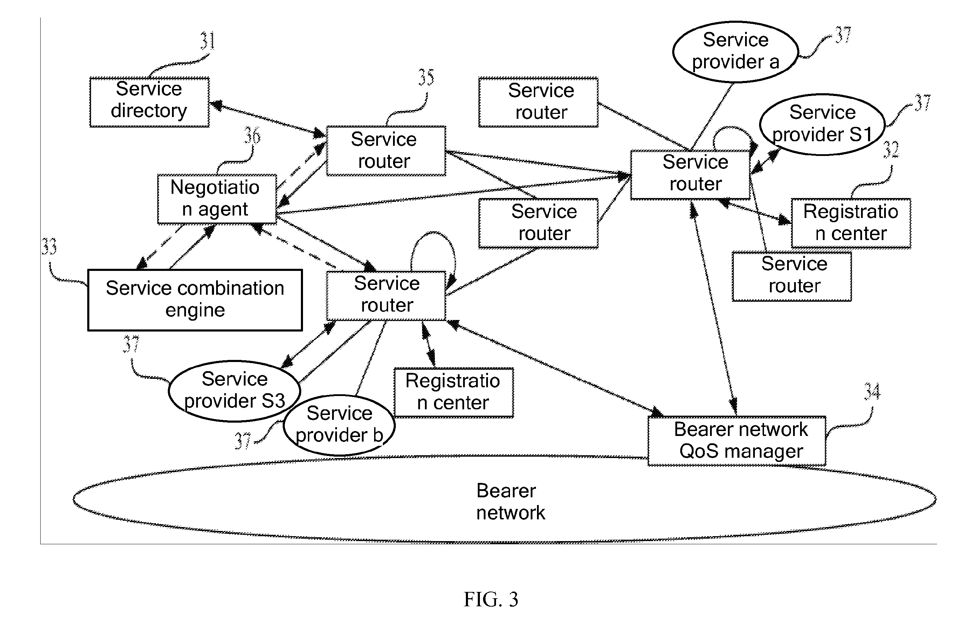

FIG. 3 illustrates a structure of a service negotiation system in an embodiment of the present invention. As shown in FIG. 3, the service negotiation system includes a service directory 31, a registration center 32, a service combination engine 33, a bearer network QoS manager 34, a service router 35, a negotiation agent 36, and a service provider 37. The negotiation agent 36 is a new function device adopted in the embodiment of the present invention.

The service directory 31 is a device already existing in the service network and logically unique in the network. It is configured to maintain (static) functional information such as ports and providers of visible services on the network.

The registration center 32 is a device already existing in the service network and logically in a one-to-one mapping with the service router 35. It is configured to maintain service information of all services that are homed to the service router 35. The service information includes the service identifier or service network address of a homed service and the related physical network address. The service information is provided when a service is registered with the service router 35.

The service combination engine 33 is configured to initiate a service negotiation request. It is a negotiation requester.

The bearer network QoS manager 34 is a device already existing in the service network, configured to manage QoS of the lower layer bearer network, including detection of the information at the physical link layer such as the connectivity state, transmission rate, delay, and jitter.

The service router 35 is a device already existing in the service network and is configured to route service layer messages. Specifically, the service router 35 routes a service layer message corresponding to the service network address of a service to the destination. After receiving a request of the negotiation agent 36, the service router 35 sends a requirement processing result in response to the service requirement information of multiple services to the negotiation agent 36.

The negotiation agent 36 is configured to receive a service negotiation request including multiple services that is sent by a negotiation requester such as the service combination engine 33 or the service router 35, and initiate service negotiation to a home service router 35 of the multiple candidate target services according to the service negotiation request, requesting the service requirement information of the multiple services. The negotiation agent 36 also selects a target service that meets a negotiation requirement according to the requirement processing result returned by the service router 35, generates a service negotiation result in response to the service negotiation request, and sends the service negotiation result to the negotiation requester.

The service provider 37 is a device already existing in the service network and configured to manage and maintain services running on the service provider.

In the above service negotiation system, the negotiation agent 36 receives the service negotiation request from a negotiation requester such as the service combination engine 33 or the service router 35, generates a target service negotiation request according to the service negotiation request, and negotiates with the service router 35, and finally generates a service negotiation result and sends the result to the negotiation requester. This achieves the service negotiation in which the service network supports multiple service requirements and meets the needs of service interactions and the requirements of the negotiation requester, and thereby, increases the success rate of service negotiation and enhances user satisfaction.

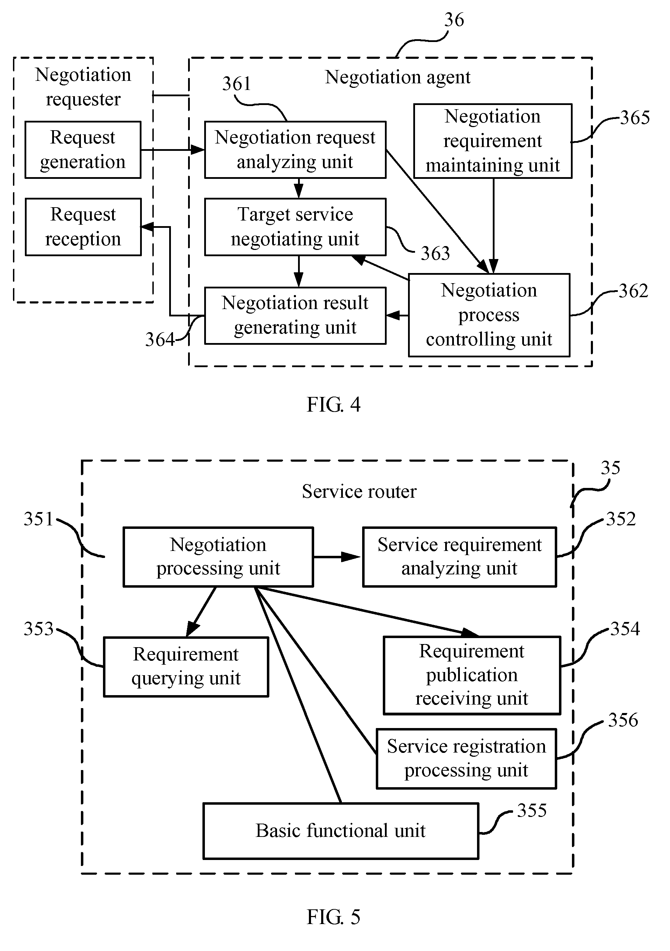

FIG. 4 illustrates a structure of a negotiation agent in an embodiment of the present invention. As shown in FIG. 4, the negotiation agent 36 includes a negotiation request analyzing unit 361, a negotiation process controlling unit 362, a target service negotiating unit 363, and a negotiation result generating unit 364.

The negotiation request analyzing unit 361 is configured to: process the service negotiation request sent by the negotiation requester, obtain a target service to be processed and a negotiation requirement, and trigger the negotiation process controlling unit 362 to proceed with the subsequent process. The negotiation requirement may include:
(1) requirement corresponding to the processing of the negotiation result, according to which the negotiation result is processed to find out the final target service; for example, select a service that responds at the earliest time from all services satisfying the service requirements; or select a service that best satisfies a single requirement from all services satisfying the service requirements; and filter out responses that are sent after the expiry of 10 seconds; and
(2) requirement corresponding to the negotiation process, according to which the negotiation process is controlled; for example, the negotiation of all target services should be completed within 10 seconds, and otherwise considered as failure.

The negotiation process controlling unit 362 is configured to: generate a negotiation requirement in response to the target services according to the negotiation requirement (requirement corresponding to the negotiation process, for example, that the negotiation should be completed within 10 seconds) in the service negotiation request and the set of target services, and activate the target service negotiating unit 363 to negotiate the target services. When receiving the negotiation results returned by all target services (or when the negotiation is ended according to the negotiation requirement), the negotiation process controlling unit 362 triggers the negotiation result generating unit 364 to generate the final result.

The target service negotiating unit 363 is configured to: negotiate target services through interactions with a home service router 35 of the target services and send the negotiation results to the negotiation result generating unit 364.

The negotiation result generating unit 364 is configured to: receive the negotiation results sent by the target service negotiating unit 363, process the negotiation results according to the negotiation requirement, select a final target service and send the selected target service to the negotiation requester.

The negotiation agent 36 may further include a negotiation requirement maintaining unit 365, configured to maintain and manage the negotiation requirement.

In the above negotiation agent 36, the negotiation request analyzing unit 361 receives the service negotiation request from a negotiation requester such as the service combination engine 33 or the service router 35; the negotiation process controlling unit 362 generates a target service negotiation request according to the service negotiation request; the target service negotiating unit 363 negotiates with the service router 35; and finally the negotiation result generating unit 364 generates the service negotiation result and sends the negotiation result to the negotiation requester. This enables the service network to support service negotiation under multiple service requirements and meets the needs of service interactions and the requirements of the negotiation requester, and thereby, increases the success rate of service negotiation and enhances user satisfaction.

FIG. 5 illustrates a structure of a service router in an embodiment of the present invention. As shown in FIG. 5, the service router 35 is a device already existing in the service network and configured to route service layer messages, and in particular, to route a service layer message corresponding to the service network address of a service to the destination. The service router 35 may also change the format of service layer messages, and modify and monitor the service layer messages so as to meet the diversified requirements.

The service router 35 may also route a message to a service of a given service category and in complete compliance with given port parameters according to a given service description. The service router 35 in the embodiment of the present invention also has service negotiation functions. The service description includes a service category and port parameters.

The service negotiation functions include:
(1) function of querying service requirements;
(2) function of judging service requirements; and
(3) function of publishing service requirements and receiving responses.

The service router 35 may include a negotiation processing system, configured to receive and process the target service negotiation request sent by the negotiation agent 36 and send the negotiation result in response to the service negotiation request to the negotiation agent 36.

The negotiation processing system may include a negotiation processing unit 351, a service requirement analyzing unit 352, a requirement querying unit 353, a requirement publication receiving unit 354, a basic function unit 355, and a service registration processing unit 356.

The negotiation processing unit 351 is configured to receive the target service negotiation request sent by the negotiation agent 36 and control the negotiation process on the service router 35, including: invoking the service requirement analyzing unit 352 to analyze the target service negotiation request, invoking the requirement querying unit 353 to query related service network devices, and invoking the requirement publication receiving unit 354 to publish new requirements. The negotiation processing unit 351 also determines whether there is an unidentifiable service requirement and if so, triggers the requirement publication receiving unit 354 to publish the requirements.

When all service requirements are identifiable, the negotiation processing unit 351 may further judge whether all service requirements are met, generate a target service negotiation result message, and send the message to the negotiation agent 36.

With respect to one target service, multiple service requirements may be used as the negotiation basis. Such service requirements include one or more of the following items:
(1) interaction protocol used by a service, which may be stored in the service directory 31 or the registration center 32;
(2) performance information of the service, including one or more of: average duration from the time when a message is sent from the service router 35 to the time when the message is received by the service provider 37, average duration from the time when a message is sent from the service router 35 to the time when the service router 35 receives the response, and network load and network busy state between the service router 35 and the service provider 37, where the performance information of the service is reported by the bearer network QoS manager 34;
(3) service limitation , including the accessible time period or total amount of access defined by the service, where the service limitation is reported by the service itself and maintained by the registration center 32;
(4) state of the service, including the busy state or processing capability of the service, where the state of the service is obtained by querying the response port of the service provider 37;
(5) provider information and interface information of the service, stored in the service directory 31;
(6) reliability of the service, specifically, the average access error rate of the service with respect to the service request, where the reliability information of the service is provided by the bearer network QoS manager 34;
(7) availability of the service, specifically, whether the service is online, where the availability information is obtained from the service provider 37;
(8) security of the service, including the provider level or security level of the connected area, where the security information is stored in the registration center 32; and
(9) price of the service, specifically, price per use or price per unit of traffic, where the price information is stored in the registration center 32.

During the negotiation process, the negotiation processing unit 351 also decides the negotiation process according to the negotiation requirement in the target service negotiation request. The negotiation requirement may include:
(1) requirement corresponding to the processing of the negotiation result, according to which the negotiation result is processed to find out the final target service; for example, select a service that responds at the earliest time from all services satisfying the service requirements; or select a service that best satisfies a single requirement from all services satisfying the service requirements; or filter out responses that are sent after the expiry of 10 seconds; and
(2) requirement corresponding to the negotiation process, according to which the negotiation process is controlled; for example, the negotiation of all target services should be completed within 10 seconds, and otherwise considered as failure.

The service requirement analyzing unit 352 is configured to: receive the target service negotiation request sent by the negotiation processing unit 351, analyze the service requirements in the target service negotiation request, and analyze the function devices corresponding to the service requirements to determine the function devices to be queried in the related service networks. The service requirement analyzing unit 352 also triggers the negotiation processing unit 351 to query the related function devices.

The bearer network QoS maintained by the bearer network QoS manager 34 is static on the network and not dynamically changeable, which is the same to all services. The service directory 31 maintains fixed information such as the port and provider of the services. The information is static. The registration center 32 maintains the state and address information of the service, which is service dynamic information. Therefore, when the service requirement analyzing unit 352 analyzes the function devices corresponding to the service requirements, the analyzing unit 352 may first analyze the bearer network QoS manager 34 and then the service directory 31, and all the remaining service requirements are processed by the registration center 32.

The requirement querying unit 353 is configured to: receive the query request sent by the negotiation processing unit 351 and query the function devices in the related service networks concurrently, and send the query results to the negotiation processing unit 351.

When the requirement querying unit 353 queries the registration center 32, in response the specific requirement, if the registration center 353 returns the information for querying ports corresponding to the service requirement and not the result of the service requirement, the requirement querying unit 353 uses the related query port at the service provider according to the information for querying ports corresponding to the service requirement to obtain the result of the service requirement.

When the requirement querying unit 353 determines that certain service requirements cannot be identified by the function devices in the related service networks, the requirement querying unit 353 notifies the negotiation processing unit 351 and stops other query sessions. The negotiation processing unit 351 sends a new service requirement publishing request to the requirement publication receiving unit 354.

The requirement publication receiving unit 354 is configured to receive the new service requirement publishing request sent by the negotiation processing unit 351 and publish the new service requirements, so that the service provider will provide a result corresponding to the new service requirements and support the new service requirements.

The basic function unit 355 is configured to perform the basic functions of the service router 35, including routing of service layer messages and message conversion.

The service registration processing unit 356 is a function unit responsible for service registration in the service router 35. In the service network, when a service is connected to the service network for the first time, the service network may allocate a home service router 35 for the service and the service register information corresponding to the service with the service router 35. The information corresponding to the service includes the mapping from the service network address of the service to the physical network address of the service.

In the service router provided in the foregoing embodiment of the present invention, the negotiation processing unit 351 receives the target service negotiation request sent by the negotiation agent 36, invokes the service requirement analyzing unit 352 to analyze the target service negotiation request, and invokes the requirement querying unit 353 to query related service network devices; and after the requirement querying unit 353 determines that there is unidentifiable service requirement, the negotiation processing unit 351 triggers the requirement publication receiving unit 354 to publish the unidentifiable service requirement. Because services are diversified, service requirements are diversified. In the embodiment of the present invention, the service router 35 publishes service requirements. Therefore, service requirements that are unidentifiable at the beginning can be detected and identified later, so that service negotiation need not be limited to specific service requirements.

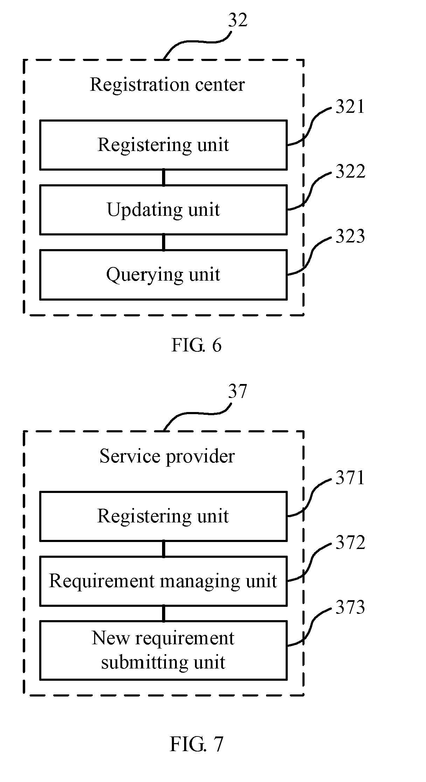

FIG. 6 illustrates a structure of a registration center in an embodiment of the present invention. As shown in FIG. 6, the registration center 32 further stores some dynamic requirement information of the service, including currently identifiable requirement information of the service and the related value. The specific value may be a numeric value or a port for querying the requirement.

The information stored in the registration center 32 is listed in Table 1.

**Table 1**

| | | | |
|---|---|---|---|
| Home Service ID | Physical Network Address | Identifiable Service Requirement and Related Value | Unidentifiable Service Requirement |
| | | Requirement = Value (the value may be a specific numeric value or a port for querying the requirement) | |
| shenlong. map.xxx | 222.222.111.1 11 | securityLevel = shenlongMap.REQinterface. | Price |
| | | securityLevel | |
| | | Accessible time period = 9:00 to 18:00; | |
| | | Allowed access = 100/day | |
| Baidu. map.xxx | | | |

The information stored in the registration center 32 may also be as listed in Table 2.

**Table 2**

| | | | |
|---|---|---|---|
| Home Service ID | Physical Network Address | Identifiable Service Requirement and Related Value | New Requirement Notification Port Address |
| | | Requirement = Value (the value may be a specific numeric value and a port for querying the requirement) | |
| shenlong. map.xxx | 222.222.111.1 11 | securityLevel = shenlongMap.REQinterface. | shenlongMap.REQN otificationInterface |
| | | securityLevel | |
| | | Accessible time period = 9:00 to 18:00; | |
| | | Allowed access = 100/day | |

As shown in FIG. 6, the registration center in the embodiment of the present invention includes a registering unit 321, an updating unit 322, and a querying unit 323.

The registering unit 321 is configured to process service information and register the service information with the registration center 32.

The updating unit 322 is configured to update existing service information.

The querying unit 323 is configured to query existing service information.

FIG. 7 illustrates a structure of a service provider in an embodiment of the present invention. As shown in FIG. 7, the service provider includes a registering unit 371, a requirement managing unit 372, and a new requirement submitting unit 373.

The registering unit 371 is configured to register service information with the service router 35. It is also configured to register the information for querying ports corresponding to a service requirement.

The requirement managing unit 372 is configured to generate a result according to a new service requirement and manage the result.

The new requirement submitting unit 373 is configured to submit a new service requirement to the service router 35.

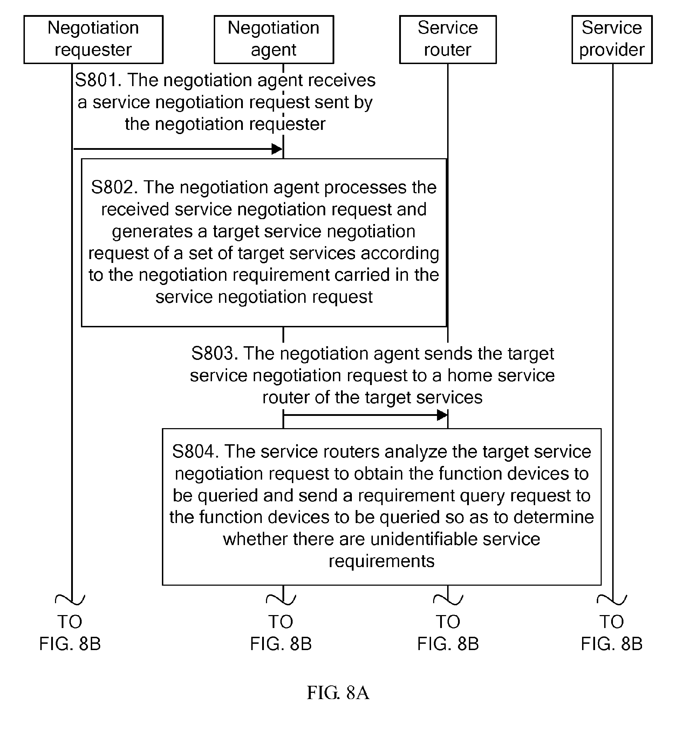

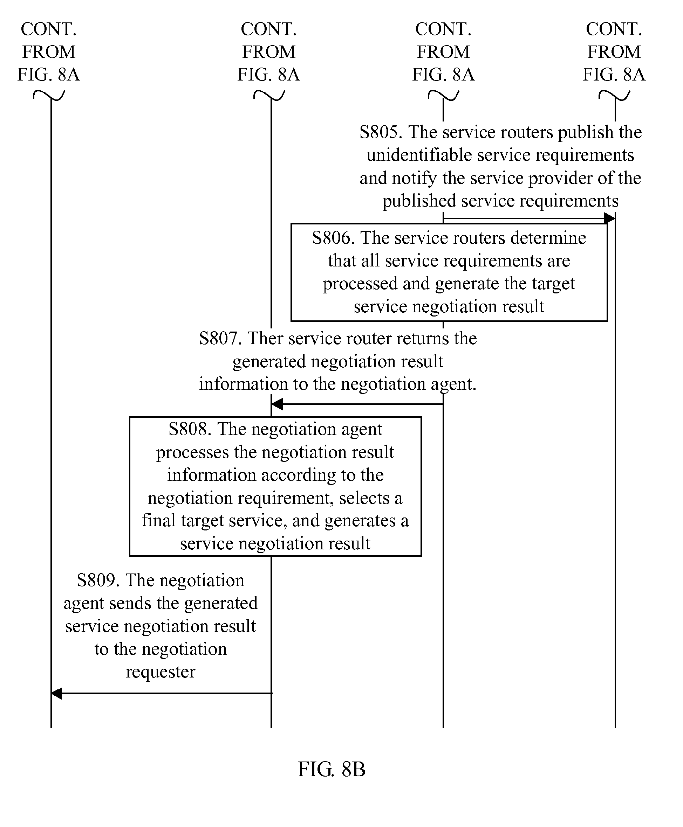

FIG. 8 is a flowchart of another service negotiation method in an embodiment of the present invention. As shown in FIG. 8, the service negotiation method includes the following steps:
Step S801: The negotiation agent 36 receives a service negotiation request sent by a negotiation requester. The negotiation requester may be the service combination engine 33 or the service router 35.
Step S802: The negotiation agent 36 processes the received service negotiation request and generates a target service negotiation request of a set of target services according to a negotiation requirement carried in the service negotiation request.
Step S803: The negotiation agent 36 sends the target service negotiation request to a home service router 35 of the target services.
Step S804: The service routers 35 analyze the target service negotiation request to determine the function devices to be queried, send a requirement query request to the function devices to be queried, and determine that there is an unidentifiable service requirement. The function devices include the service directory 31, the registration center 32, the bearer network QoS manager 34, and the service provider 37.
   The service routers 35 determine there is an unidentifiable service requirement as follows: after the service routers 35 have queried all function devices to be queried, if no information corresponding to a service requirement is obtained, the service routers 35 determine that the service requirement is unidentifiable.
Step S805: The service routers 35 publish the unidentifiable service requirement and notify the service provider 37 of the published service requirement, and the service provider 37 generates a result corresponding to the service requirements.
Step S806: The service routers 35 determine that all service requirements are processed and generate the target service negotiation result information. That all service requirements are processed may be that the service routers have obtained the result corresponding to the service requirements or published new service requirements.
Step S807: The service routers 35 send the generated negotiation result information to the negotiation agent 36.
Step S808: The negotiation agent 36 processes the negotiation result information according to the negotiation requirement, selects the final target service, and generates a service negotiation result.
Step S809: The negotiation agent 36 sends the generated service negotiation result to the negotiation requester.

In the above service negotiation method, the negotiation agent 36 receives the service negotiation request from a negotiation requester such as the service combination engine 33 or service router 35, generates a target service negotiation request according to the service negotiation request, and negotiates with the service routers 35, and finally generates a service negotiation result and sends the result to the negotiation requester. This achieves the service negotiation in which the service network supports multiple service requirements and meets the needs of service interactions and the requirements of the negotiation requester, and thereby, increases the success rate of service negotiation and enhances user satisfaction.

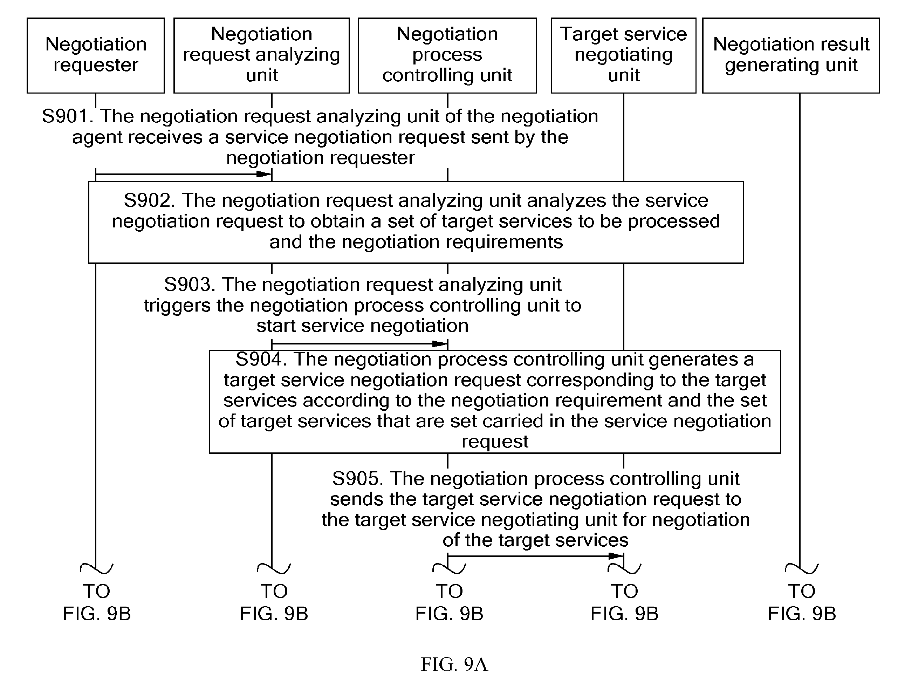

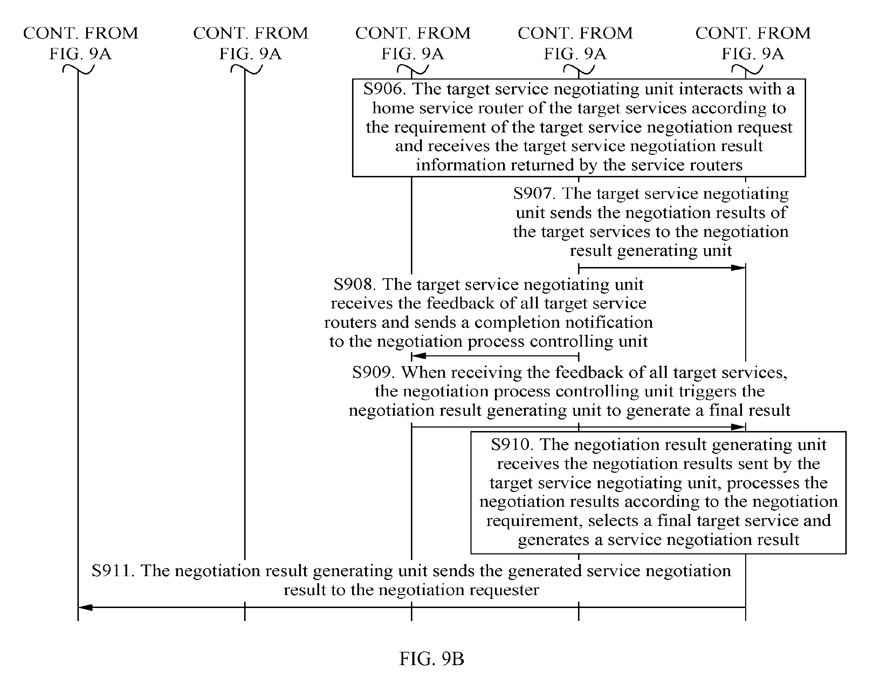

FIG. 9 illustrates a procedure where the negotiation agent processes a service negotiation request according to an embodiment of the present invention. As shown in FIG. 9, the procedure includes the following steps:
Step S901: The negotiation request analyzing unit 361 of the negotiation agent 36 receives a service negotiation request sent by a negotiation requester. The negotiation requester may be the service combination engine 33 or service router 35.
Step S902: The negotiation request analyzing unit 361 analyzes the service negotiation request to obtain a set of target services to be processed and the a negotiation requirement.
Step S903: The negotiation request analyzing unit 361 triggers the negotiation process controlling unit 362 to start service negotiation.
Step S904: The negotiation process controlling unit 362 generates a target service negotiation request corresponding to the target services according to the negotiation requirement and the set of target services that are carried in the service negotiation request.
Step S905: The negotiation process controlling unit 362 sends the target service negotiation request to the target service negotiating unit 362 for negotiation of the target services.
Step S906: The target service negotiating unit 363 interacts with a home service router 35 of the target services according to the requirement of the target service negotiation request and receives the target service negotiation result information returned by the service routers 35. Because there are multiple target services, the target service negotiating unit 363 interact with multiple service routers 35.
Step S907: The target service negotiating unit 363 sends the negotiation results of the target services to the negotiation result generating unit 364. The target service negotiating unit 363 may send the negotiation results at one time after the negotiation results of all target services are received, or it may send the negotiation result of each single target service separately.
Step S908: The target service negotiating unit 363 receives the feedback of all target service routers 35 and sends a completion notification to the negotiation process controlling unit 362.
Step S909: When the negotiation process controlling unit 362 receives the feedback of all target services, the negotiation process controlling unit 362 triggers the negotiation result generating unit 364 to generate a final result. The process of triggering the negotiation result generating unit 364 to generate a final result may be initiated according to the negotiation requirement, for example, waiting for 10 seconds and then triggering the negotiation result generating unit 364 to process target services that have returned a negotiation result. In this case, step S909 can proceed before step S908.
Step S910: The negotiation result generating unit 364 receives the negotiation results sent by the target service negotiating unit 363, processes the negotiation results according to the negotiation requirement, and selects a final target service and generates a service negotiation result.
Step S911: The negotiation result generating unit 364 sends the generated service negotiation result to the negotiation requester.

In the embodiment of the present invention, when it is necessary to use a negotiation requirement, the negotiation requirement maintaining unit 365 may be queried.

In the above process in which the negotiation agent processes a service negotiation request, the negotiation request analyzing unit 361 of the negotiation agent 36 receives the service negotiation request sent by the negotiation requester; the negotiation process controlling unit 362 generates a target service negotiation request according to the service negotiation request; the target service negotiating unit 363 negotiates with the service routers 35; and finally the negotiation result generating unit 364 generates a service negotiation result and sends the result to the negotiation requester. This enables the service network to support service negotiation under multiple service requirements and meets the needs of service interactions and the requirements of the negotiation requester, and thereby, increases the success rate of service negotiation and enhances user satisfaction.

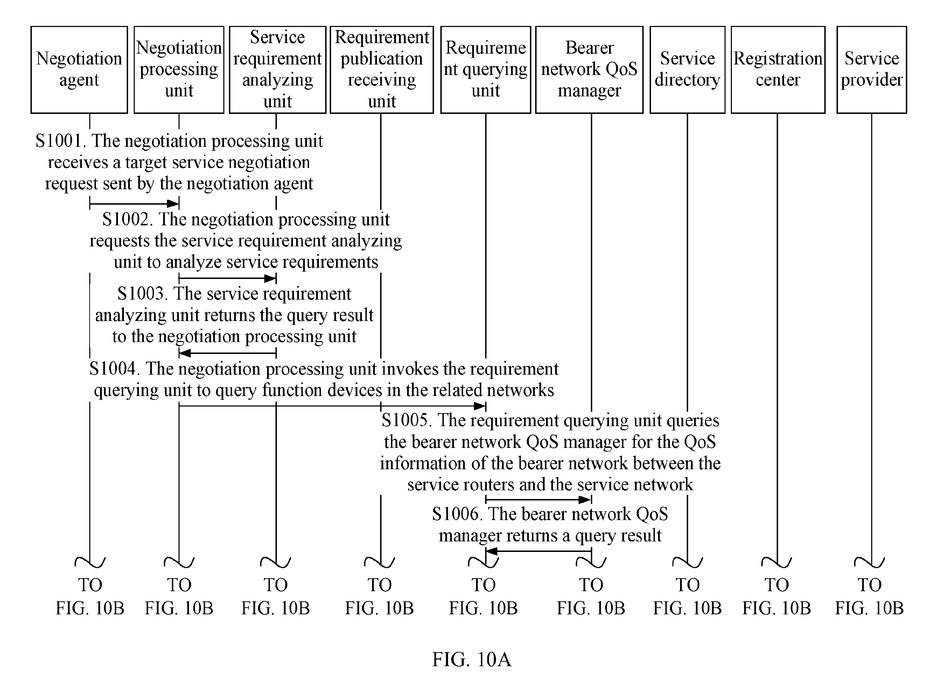

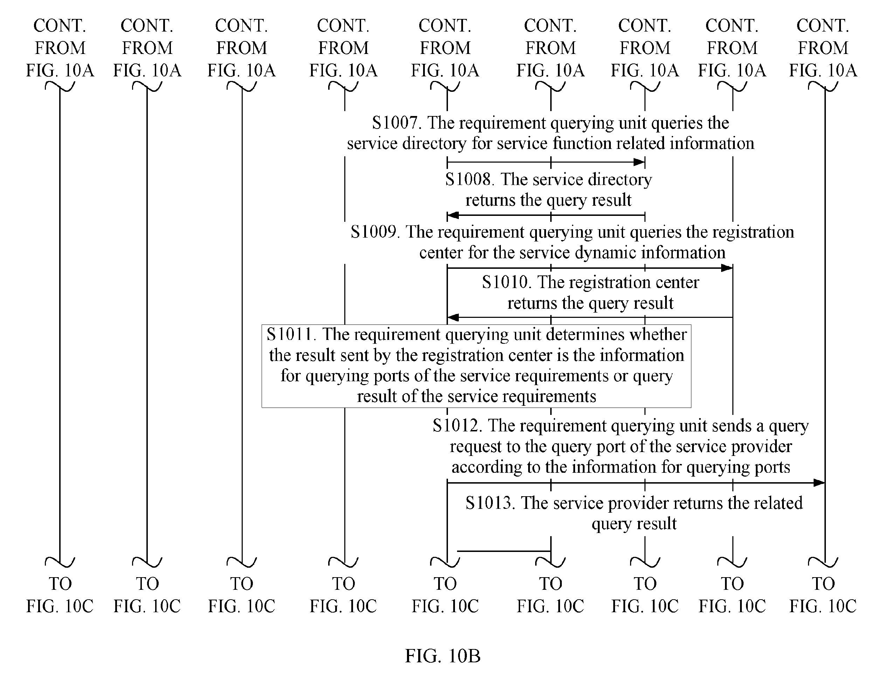

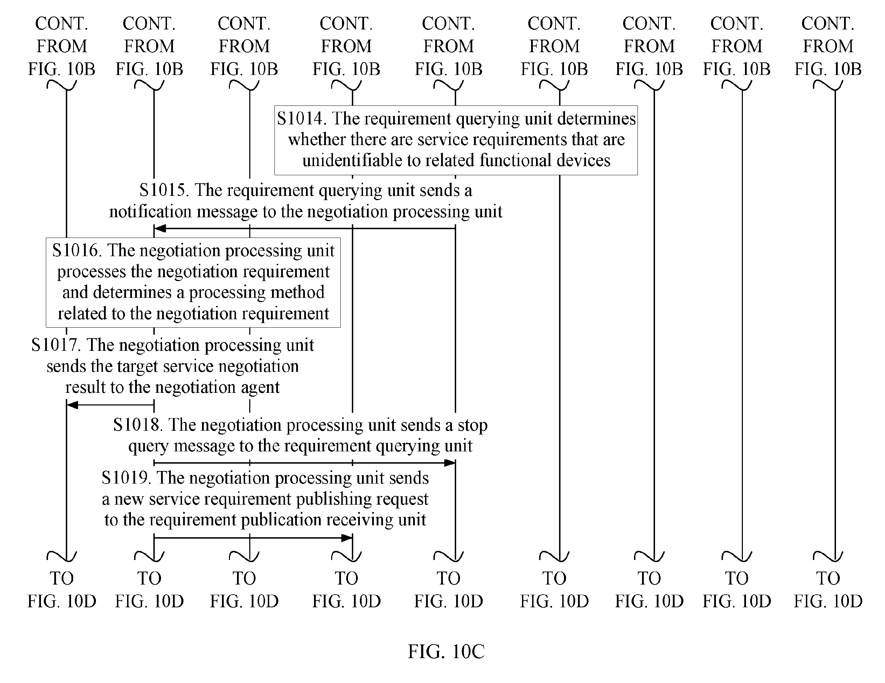

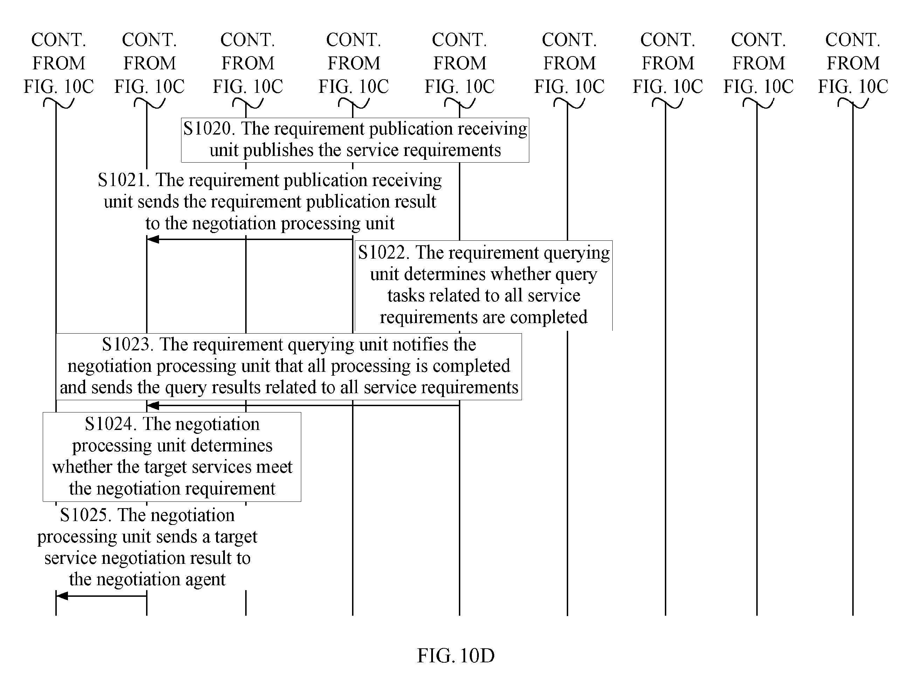

FIG. 10 illustrates the negotiation procedure of a service router in an embodiment of the present invention. As shown in FIG. 10, the procedure includes the following steps:
Step S1001: The negotiation processing unit 351 of the service router 35 receives a target service negotiation request sent by the negotiation agent 36.
Step S1002: The negotiation processing unit 351 requests the service requirement analyzing unit 352 to analyze service requirements.
Step S1003: The service requirement analyzing unit 352 obtains the service requirements carried in the target service negotiation request, and analyzes the function devices corresponding to the service requirements to determine the function devices to be queried in the related service networks. The service requirement analyzing unit 352 sends an analysis result to the negotiation processing unit 351.
Step S1004: The negotiation processing unit 351 invokes the requirement querying unit 353 to query the function devices in the related networks according to the analysis result of the service requirement analyzing unit 352.
Step S1005: The requirement querying unit 353 queries the bearer network QoS manager 34 for the QoS information of the bearer network between the service router 35 and the service network.
Step S1006: The bearer network QoS manager 34 returns a query result.
Step S1007: The requirement querying unit 353 queries the service directory 31 for the service function related information, including service provider, service category, and service interface description information.
Step S1008: The service directory 31 returns the query result.
Step S1009: The requirement querying unit 353 queries the registration center 32 for the service dynamic information.
Step S1010: The registration center 32 returns the query result.
Steps S1005 to S1010 are concurrent and related steps can be omitted according to the analysis result of the service requirement analyzing unit 352.
Step S1011: The requirement querying unit 353 determines whether the feedback sent by the registration center 32 is the information for querying ports corresponding to the service requirements or query result of the service requirements. If the information for querying ports corresponding to the service requirements is returned, step S1012 proceeds. If the information is not returned, step S1014 proceeds.
Step S1012: The requirement querying unit 353 sends a query request to the query port of the service provider 37 according to the information for querying ports.
Step S1033: The service provider 37 returns the related query result.
Step S1014: The requirement querying unit 353 determines whether there are service requirements that are unidentifiable to the related function devices, for example, whether a service requirement is unidentifiable to the bearer network QoS manager 34, or whether a service requirement is absent in the list of supported service requirements of any of the related function devices. If there is an unidentifiable service requirement, steps S1015 to S1021 are executed. If there are no unidentifiable service requirements, step S1022 is executed.
Step S1015: The requirement querying unit 353 sends a notification message to the negotiation processing unit 351, notifying the negotiation processing unit 351 of the unsupported service requirements. The notification message carries tags of the unsupported service requirements.
Step S1016: The negotiation processing unit 351 processes a negotiation requirement and determines a processing method corresponding to the negotiation requirement. For example, when a certain negotiation requirement is marked optional and not mandatory, the negotiation requirement may not be processed. If a negotiation requirement is marked mandatory, steps S 1017 and S1018 are executed.
Step S1017: The negotiation processing unit 351 sends the target service negotiation result to the negotiation agent 36. The target service negotiation result indicates that the target service does not match the requirement because the key requirement is unidentifiable.
Step S1018: The negotiation processing unit 351 sends a stop query message to the requirement querying unit 353 to stop the ongoing concurrent query tasks to avoid an unnecessary waste of system resources.
Step S1019: Preferably, the negotiation processing unit 351 sends a new service requirement publishing request to the requirement publication receiving unit 354.
Step S1020: The requirement publication receiving unit 354 publishes the service requirements so that the service provider 37 can provide feedback corresponding to the new service requirements and thereby support the new service requirements.
Step S1021: The requirement publication receiving unit 354 sends the requirement publication result to the negotiation processing unit 351.
Step S1022: The requirement querying unit 353 determines whether query tasks corresponding to all service requirements are completed. If not completed, the requirement querying unit 353 keeps waiting; if completed, step S1023 continues.
Step S1023: The requirement querying unit 353 notifies the negotiation processing unit 351 that all processing is completed and sends the query results corresponding to all service requirements.
Step S1024: The negotiation processing unit 351 processes the query results corresponding to all service requirements according to the negotiation requirement and determines whether the target service meets the negotiation requirement.
Step S1025: The negotiation processing unit 351 sends the target service negotiation result to the negotiation agent 36. The target service negotiation result may be that the target service meets the negotiation requirement; or when the target service does not meet the negotiation requirement, the target service negotiation result may be that the target service does not meet the negotiation requirement.

In the above negotiation process of the service router, the negotiation processing unit 351 receives the target service negotiation request sent by the negotiation agent 36, invokes the service requirement analyzing unit 352 to analyze the target service negotiation request, and invokes the requirement querying unit 353 to query related service network devices; and after the requirement querying unit 353 determines that there is an unidentifiable service requirement, the negotiation processing unit 351 triggers the requirement publication receiving unit 354 to publish the unidentifiable service requirement. In the embodiment of the present invention, the service router 35 performs service negotiation. Through the publication of service requirements, service requirements that are unidentifiable at the beginning can be detected and identified later and thereby, service negotiation need not be limited to specific service requirements.

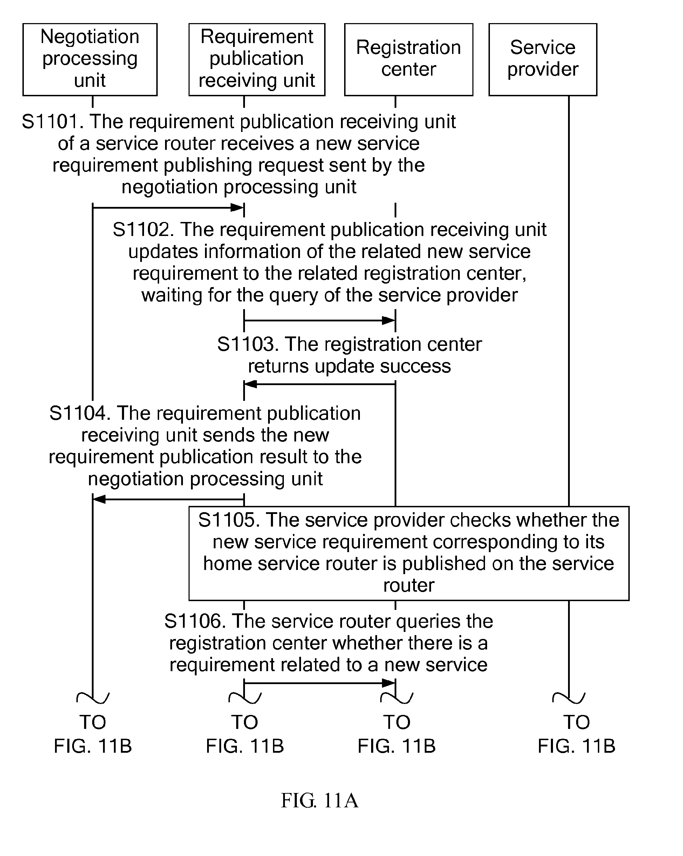

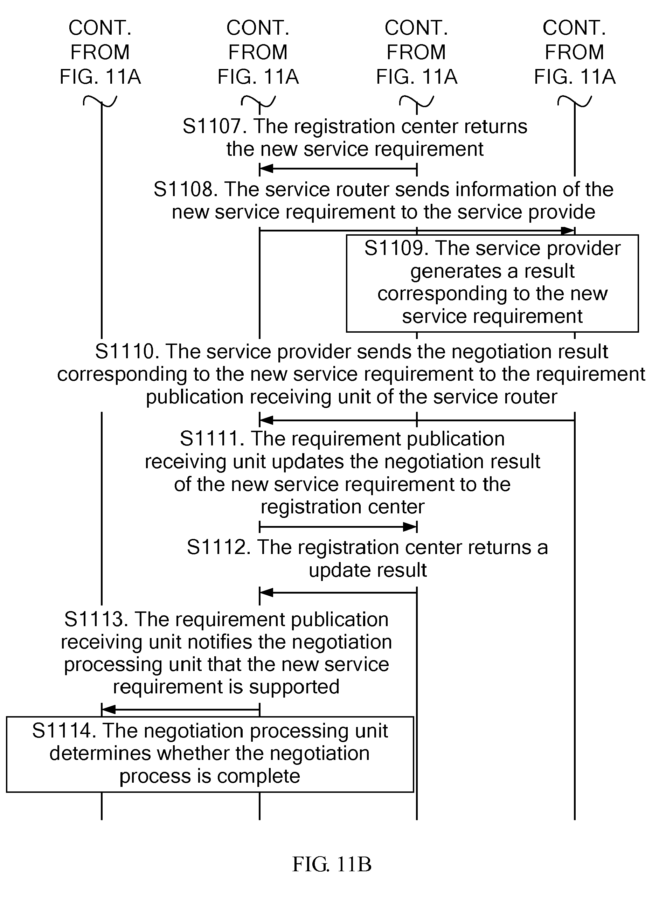

FIG. 11 illustrates a procedure for publishing a new service requirement in an embodiment of the present invention. As shown in FIG. 11, the procedure for publishing a new service requirement includes the following steps:
Step S1101: The requirement publication receiving unit 354 of a service router 35 receives a new service requirement publishing request sent by the negotiation processing unit 351.
Step S1102: The requirement publication receiving unit 354 updates information of the related new service requirement to the related registration center 32, waiting for the query of the service provider 37.
Step S1103: The registration center 32 sends an update success response.
Steps S 1102 and S 1103 are exemplary. Optionally, the information of the new service requirement is stored in the service router 35.
Step S1104: The requirement publication receiving unit 354 sends the new service requirement publication result to the negotiation processing unit 351.
Step S1105: The requirement managing unit 372 of the service provider 37 checks whether the new service requirement corresponding to its home service router 35 is published on the home service router 35. Specifically:
   (a) The service provider 37 checks whether the new service requirement corresponding to its home service router 35 is published on the home service router 35 through periodical polling or random checking.
   (b) The service provider 37 subscribes to service requirement change notifications from the service router 35 in advance; when there is a change of service requirements, a related notification message is sent to the service provider 37, notifying whether the new service requirement corresponding to its home service router 35 is published on the home service router 35.
Step S1106: The service router 35 queries the registration center 32 whether there is a requirement corresponding to the new service.
Step S 1107: The registration center 32 returns the new service requirement.
Step S1108: The service router 35 sends information of the new service requirement to the service provider 37.
Step S1109: The service provider 37 generates a result corresponding to the new service requirement. The result corresponding to the new service requirement may be a specific numeric value corresponding to the new service requirement, or information for querying ports corresponding to the new service requirement.
Step S1110: The service provider 37 sends the negotiation result corresponding to the new service requirement to the requirement publication receiving unit 354 of the service router 35.
Step S1111: The requirement publication receiving unit 354 of the service router 35 updates the negotiation result of the new service requirement to the registration center 32.
Step S 1112: The registration center 32 returns a update result.
Step S1113: The requirement publication receiving unit 354 notifies the negotiation processing unit 351 that the new service requirement is supported.
Step S1114: The negotiation processing unit 351 determines whether the negotiation process is complete, and if not, marks the service requirement as identifiable and continues with the subsequent negotiation process. In this way, new service requirements can be responded to quickly in long negotiation processes.
Steps S 1113 and S 1114 are optional.

In the embodiment of the present invention, through the publication of service requirements, service requirements that are unidentifiable at the beginning can be detected and identified later and thereby, service negotiation need not be limited to specific service requirements.

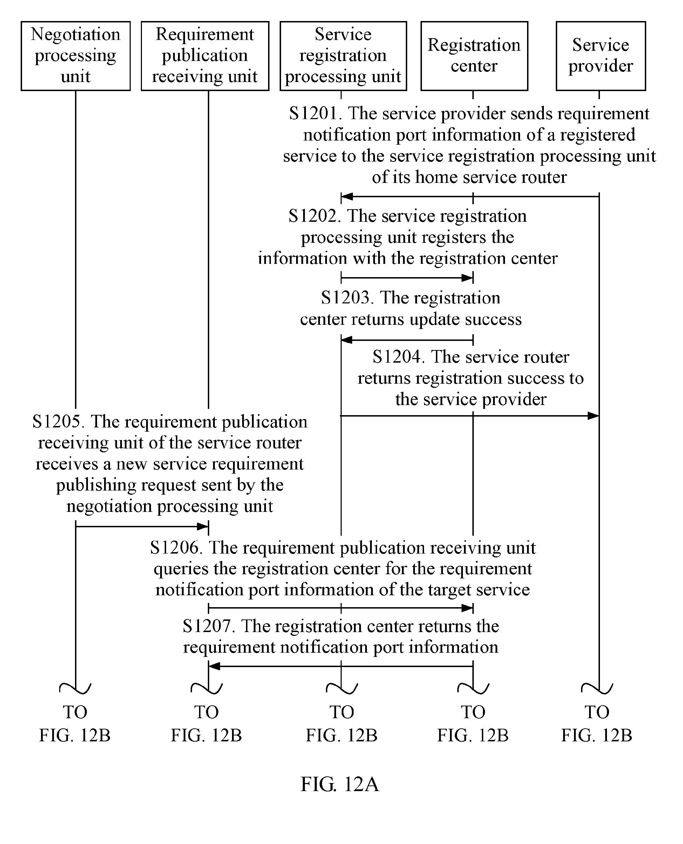

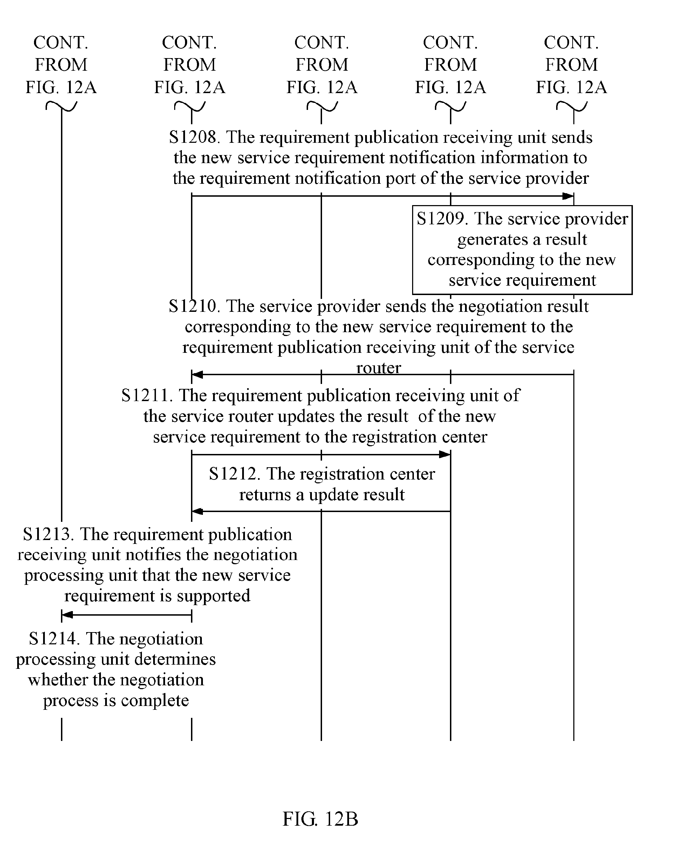

FIG. 12 illustrates another procedure for publishing a new service requirement in an embodiment of the present invention. As shown in FIG. 12, the procedure includes the following steps:
Step S1201: The service provider 37 sends requirement notification port information for service registration to the service registration processing unit 356 of its home service router 35.
Step S1202: The service registration processing unit 356 registers the information with the registration center 32.
Step S1203: The registration center 32 returns registration success.
Step S1204: The service router 35 returns registration success to the service provider 37.
Step S1205: The requirement publication receiving unit 354 of the service router 35 receives a new service requirement publishing request sent by the negotiation processing unit 351.
Step S1206: The requirement publication receiving unit 354 queries the registration center 32 for the requirement notification port information of the target service.
Step S1207: The registration center 32 returns the requirement notification port information.
Step S1208: The requirement publication receiving unit 354 sends the new service requirement notification information to the requirement notification port of the service provider 37.
Step S1209: The service provider 37 generates a result corresponding to the new service requirement.

The result corresponding to the new service requirement may be a specific numeric value corresponding to the new service requirement, or information for querying ports corresponding to the new service requirement.
Step S1210: The service provider 37 sends the result corresponding to the new service requirement to the requirement publication receiving unit 354 of the service router 35.
Step S1211: The requirement publication receiving unit 354 of the service router 35 updates the result of the new service requirement to the registration center 32.
Step S1212: The registration center 32 returns a update result.
Step S1213: The requirement publication receiving unit 354 notifies the negotiation processing unit 351 that the new service requirement is supported.
Step S1214: The negotiation processing unit 351 determines whether the negotiation process is complete, and if not complete, marks the service requirement as identifiable and continues with the subsequent negotiation process. In this way, new service requirements can be responded to quickly in long negotiation processes.
Steps S1213 and S1214 are optional.

In the embodiment of the present invention, through the publication of service requirements, service requirements that are unidentifiable at the beginning can be detected and identified later and thereby, service negotiation need not be limited to specific service requirements.

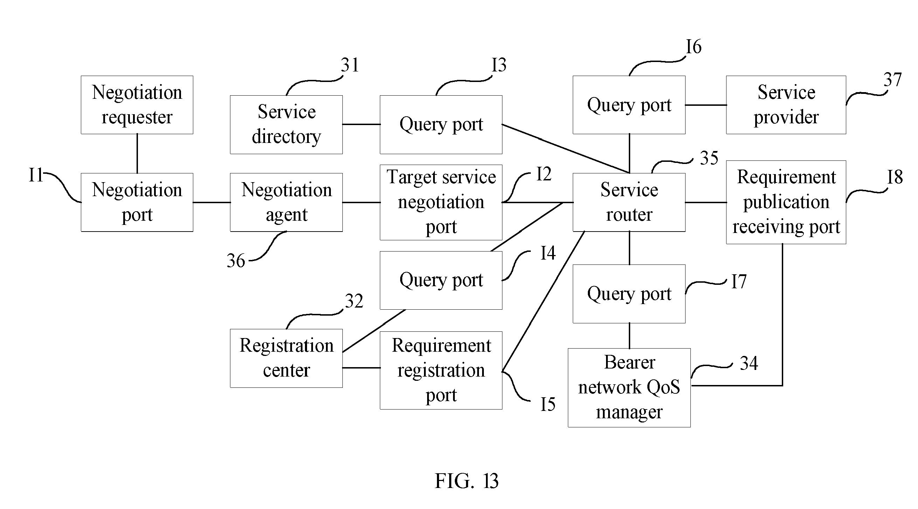

FIG. 13 illustrates port relations in an embodiment of the present invention. As shown in FIG. 13, the port relations are as follows:
(1) port between the negotiation requester and the negotiation agent 36: negotiation port I1;
(2) port between the negotiation agent 36 and the service router 35: target service negotiation port 12;
(3) port between the service router 35 and the service directory 31: query port I3;
(4) port between the service router 35 and the registration center 32: query port 14 and requirement registration port I5;
(5) port between the service router 35 and the service provider 37: query port 16; and
(6) port between the service router 35 and the bearer network QoS manager 34: query port 17 and requirement publication receiving port I8.

The ports are described hereafter.
1. Negotiation port I1
2. An ingress message of the negotiation port is a service negotiation request which carries the following information:
   (1) service network addresses or service identifiers of multiple candidate target services, and information for addressing a home service router 35 of the target services;
   (2) service requirements, including:
      (a) determined scope of target services to be processed, supporting differentiated processing of the target services specified by (1), for example All for processing all target services, or specific sequence numbers of target services to be processed;
      (b) name of a service requirement, such as the price, stability, interaction protocol, and provider;
      (c) service requirement processing mode, for example, strict matching, or above or below a standard; and
      (d) value of a service requirement;
   (3) negotiation requirement, for example, the negotiation result is valid only when returned within a certain period of time; select the one that satisfies all requirements or the one that responds at the earliest time, which may include the following two parts:
      (a) requirement corresponding to the processing of negotiation results, according to which the negotiation results are processed to find out the final target service; for example, select the one that responds at the earliest time from the services satisfying the requirements as the final target service; or select the one that best satisfies a certain requirement from the services satisfying the requirements as the final target service; or filter out negotiation results that are returned after the expiry of 10 seconds; or select the negotiation results according to the priority from multiple services that satisfy the service requirements;
      (b) requirement corresponding to the negotiation process, according to which the negotiation process is controlled. The process here refers to the process from the time when the negotiation agent 36 receives a service negotiation request to the time when the negotiation agent 36 returns the negotiation result. For example, the negotiation of all target services should be completed within 10 seconds, and otherwise considered as failure.

The following provides a service negotiation request described by the extensible Markup Language (XML):

```
    <?xml version="1.0" encoding="UTF-8" ?>
    <ServiceNegotiationRequest>
       <AddressSet>
            <address id="1">Service Address1</address>
            <address id="2">Service Address2</address>
            <address id="3">Service Address3</address>
       </AddressSet>
       <DemandForServices>
            <demand id="1" scope="all" pattern="match" isOptional="false">
                <item>protocol</item>
                <value>soap</value>
            </demand>
            <demand id="2" scope="all" pattern="lower" isOptional="false">
                <item>price</item>
                <value> 10</value>
            </demand>
            <demand id="3" scope="all" pattern="higher" isOptional="true">
                <item>stability</item>
                <value>98</value>
            </demand>
       </DemandForServices>
       <ClaimForNegotiation>
            <ClaimForProcess>
                <claim id="1" type="time limit">90</claim>
            </ClaimForProcess>
            <ClaimForResult>
                <claim id="1" type="priority list">2,1,3</claim>
            </ClaimForResult>
       </ClaimForNegotiation>
    </ServiceNegotiationRequest>
```

The above service negotiation request describes the following information:
(a) service addresses: service addresses of three candidate target services;
(b) service requirements: requiring Simple Object Access Protocol (SOAP), price below 10, and stability above 98 (optional) with respect to all services; and
(c) negotiation requirement: requiring that negotiation results be returned with 90 seconds and that the service of the highest priority be select according to the specified priority list (2, 1,3).

The egress message of the negotiation port I1 is a service negotiation result which includes the following information:
(1) service network address or identifier of the final service; and
(2) negotiation log, used to record certain information in the negotiation process, for example, total negotiation processing time and the used negotiation policy.

The following is a service negotiation result described by using XML:

```
          <?xml version="1.0" encoding="UTF-8" ?>
          <ServiceNegotiationResult>
            <address>service address 1</address>
            <log>time=40;suitable candidate=2;</log>
          </ServiceNegotiationResult>
```

The above service negotiation result describes the following information:
(a) final service address: one final service address; and
(b) negotiation log: recording that the total time consumed by the negotiation process is 40 seconds and that two candidate services satisfy the service requirements (one is finally selected).

### 2. Target service negotiation port 12

The ingress message of the target service negotiation port 12 is a target service negotiation request which includes the following information:
(1) service network addresses or identifiers of target services, for addressing the home service router 35 of the target services, according to which, the home service router 35 routes service messages to the home service router of the target services to be processed;
(2) service requirement information, which is extracted by the negotiation agent 36 from the service requirement information carried in the service negotiation request according to the target services and according to which the service routers 35 determine the function devices to be queried; and
(3) negotiation requirement information, which is corresponding to the target services and generated by the negotiation agent 36 according to the negotiation requirement in the service negotiation request.

The negotiation requirement information also includes two parts:
(a) requirement corresponding to the processing of the target service negotiation result, according to which the service router 35 processes the target service negotiation result; and
(b) requirement corresponding to the target service negotiation process, according to which the service router 35 controls the negotiation process.

The following is a target service negotiation request described by using XML:

```
          <?xml version="1.0" encoding="UTF-8" ?>
          <TargetServiceNegotiationRequest>
            <address>service Address 1</address>
            <DemandForServices>
                <demand id="1" scope="all" pattern="match" isOptional="false">
                     <item>protocol</item>
                     <value>soap</value>
                </demand>
                <demand id="2" scope="all" pattern="lower" isOptional="false">
                     <item>price</item>
                     <value> 10</value>
                </demand>
                <demand id="3" scope="all" pattern="higher" isOptional="true">
                     <item>stability</item>
                     <value>98</value>
                </demand>
            </DemandForServices>
            <ClaimForNegotiation>
                <ClaimForProcess>
                     <claim id="1" type="time limit">90</claim>
                     <claim id="2" type="if have new req then false">true</claim>
                     <claim id="3" type="publish new req">true</claim>
                </ClaimForProcess>
                <ClaimForResult />
               </ClaimForNegotiation>
          </TargetServiceNegotiationRequest>
```

The above target service negotiation request describes the following information:
(a) service address: service network address of the target service;
(b) service requirement: protocol SOAP, price below 10, and stability above 98 (optional); and
(c) negotiation requirement: negotiation result should be returned within 70 seconds; if there are service requirements unidentifiable to the service router, return that the service does not meet the requirement and if there are new service requirements, publish the new requirements.

An egress message of the target service negotiation port 12 is a target service negotiation result which includes the following information:
(1) negotiation result ID, identifying the negotiation result and information, for example, whether the target service meets the service requirements and if not, whether the reason is that service requirements are not met or that service requirements are unidentifiable; whether the processing of other service requirements continues when one service requirement is unidentifiable; whether all requirements are met if all service requirements are processed;
(2) value of the target service with respect to the service requirements (optional); and
(3) log, recording information in the negotiation process, for example, negotiation processing time and tags of queried related function devices.

The following is a target service negotiation result described by using XML:

```
          <?xml version="1.0" encoding="UTF-8" ?>
          <TargetServiceNegotiationResult>
            <Result> 101 </Result>
            <DemandDetail>
                <demand id="1">
                     <item>protocol</item>
                     <value>soap</value>
                </demand>
                <demand id="2">
                     <item>price</item>
                     <value>5</value>
                </demand>
                <demand id="3 ">
                     <item>stability</item>
                     <value>99</value>
                </demand>
            </DemandDetail>
          </TargetServiceNegotiationResult>
```

The above target service negotiation result describes the following information:
(a) negotiation result ID: 101, indicating that the target service does not meet the requirements, that there are new service requirements and query corresponding to other service requirements are stopped, and that the new service requirements are published;
(b) value of the target service: price = 5; stability = 99 (optional); and
(c) negotiation log: recording that the total time consumed by the negotiation process is 40 seconds and that the queried related function devices are the service directory, service registration center and service provider.

### 3. Requirement registration port 15

The ingress message of the requirement registration port 15 includes the following information:
(a) service identifier: service network address or identifier of the port to be registered; and
(b) information of the port to receive the requirement notification message.

The egress message of the requirement registration port 15 includes the result of the service requirement registration (success or failure).

### 4. Requirement publication receiving port 18

The general ingress message of the requirement publication receiving port 18 includes the following information:
(a) new requirement publishing request;
(b) service identifier: network address or identifier of the target service; and
(c) (optional) new service requirement information: name of an unidentifiable new service requirement and description of the service requirement.

The general egress message of the requirement publication receiving port 18 includes the following information:
(a) result notification corresponding to the new requirement;
(b) service identifier: network address or identifier of the target service; and
(c) result corresponding to the new service requirement, which may be a specific numeric value corresponding to the new service requirement, or information for querying ports corresponding to the new service requirement.

Either the new requirement query message or the new requirement change subscription message of the requirement publication receiving port 18 can be selected, depending on the actual implementation scheme (polling or notification subscription).

### (a) Polling

The ingress message includes: the service identifier, the service network address or identifier of the service to be queried.

The egress message includes: requirement description of new services which is requirement information of target services that are unidentifiable to the service router 35; and description of service requirements (optional).

### (b) Notification subscription

The ingress message includes:
(1) service identifier: service network address or identifier of the service to be subscribed to;
(2) port address by using which the change notification is received: when there is a new service requirement, the service router 35 is triggered to send a change notification to the requirement publication receiving port I8;
(3) (optional) requirement category: specifying the category of service to be subscribed to; the notification is sent only for the specified category of service; and
(4) (optional) requirement exclusion category: specifying the category of service not to subscribed to; the notification is sent only for service categories that are not specified here.

The egress message includes: subscription result (success or failure).

An exemplary embodiment is described to explain the implementation process of the present invention.

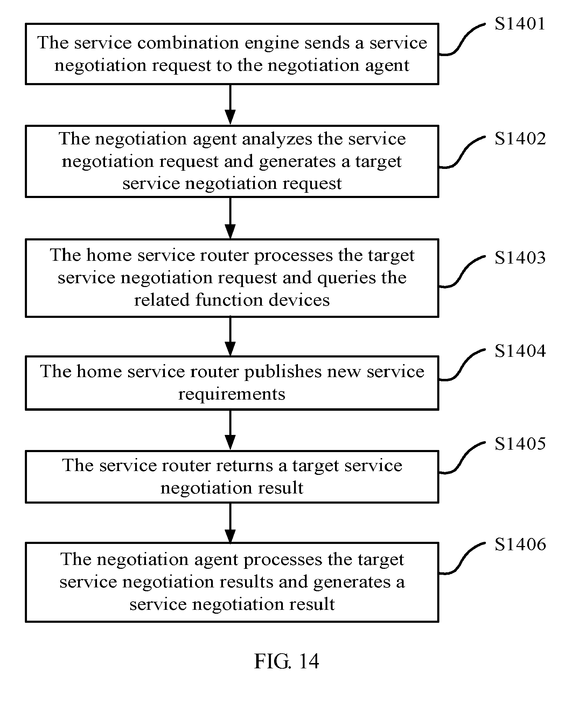

On a service network, user A requests to execute a combined service, "location-based map service", which shows the map information near the current location of the user. The service combination engine 33 of the service network executes the service. In the execution process, the service combination engine 33 first invoke the location service and then the map service. In the description of the combined service, a normal map service (service invoked in a normal execution process) is Google map service and there are two candidate map services, Baidu map service and Shenlong map service. During the execution, the service combination engine 33 knows that Google map service is under maintenance so it is necessary to use a candidate map service. Because there are two candidate map services, the service combination engine 33 needs to determine a most proper map candidate service to take the place of the normal service. FIG. 14 provides the flowchart of the above exemplary embodiment of the present invention. As shown in FIG. 14, the process includes the following steps:
Step S1401: The service combination engine 33 sends a service negotiation request to the negotiation agent 36.

The service negotiation request carries the service network addresses of the two candidate services and requirement information corresponding to the services including use of SOAP, price below 10 and stability above 98 (optional).

In addition, with respect to the second service (Shenlong map), the security level is required to be above 2. A negotiation requirement specifies that the negotiation process should be completed within 90 seconds, and the priority sequence of negotiation of the service requirements is first price, then interaction protocol, and finally stability.

The service negotiation request described by using XML is as follows:

```
          <input>
            <AddressSet>
                <address id="1">baidu map address</address>
                <address id="2">shenlong map address</address>
            </AddressSet>
            <DemandforServers>
                <demand id="1" scope="all" pattern="match" isOptional="false">
                     <item>protocol</item>
                     <value>soap</value>
                </demand>
                <demand id="2" scope="all" pattern="lower" isOptional="false">
                     <item>price</item>
                     <value> 10</value>
                </demand>
              <demand id="3" scope="all" pattern="higher" isOptional="true">
                    <item>stability</item>
                    <value>98</value>
              </demand>
              <demand id="3" scope="2" pattern="higher" isOptional="false">
                    <item>SecurityLevel</item>
                   <value>2</value>
              </demand>
          </DemandforServers>
          <DemandforNegotiation>
          <DemandforProcess>
          <demand id="1" type="timeLimit">90</demand>
              </DemandforProcess>
              <DemandforResult>
          <demand id="1" type="priorityList">2,1,3</demand>
          </DemandforResult>
          </DemandforNegotiation>
          </input>
```

Step S1402: The negotiation agent 36 analyzes the service negotiation request and generates a target service negotiation request.

The negotiation agent 36 analyzes the service negotiation request and generates respective target service negotiation requests for the two target services. Each target service negotiation request carries the service network address of the target service and the requirement information corresponding to the target service. The requirement information corresponding to the target service is the same as the requirement information in step S1401. The negotiation requirement corresponding to the target service specifies that the negotiation time is within 70 seconds, and that, if there is an unidentifiable service requirement, result information should be returned immediately indicating that the service does not meet the requirements. Alternatively, the requirement may specify to wait for feedback until the expiry of the specified time after the service is published, and if there is an unidentifiable service requirement, publish the service requirements. The feedback information includes information of the queried devices and the specific query values.

For example, the target service negotiation request corresponding to Baidu map service is as follows:

```
          <input>
            <Address>baidu map address</Address>
            <DemandforServers>
                <demand id="1" pattern="match" isOptional="false">
                     <item>protocol</item>
                     <value>soap</value>
                </demand>
                <demand id="2" pattern="lower" isOptional="false">
                     <item>price</item>
                     <value> 10</value>
                </demand>
                <demand id="3" pattern="higher" isOptional="true">
                     <item>stability</item>
                     <value>98</value>
                </demand>
            </DemandforServers>
            <DemandforNegotiation>
                <DemandforProcess>
                     <demand id="1" "type="timeLimit">70</demand>
                     <demand id="2" type="ifHaveNewReqThenFalse">true</demand>
                    <demand id="3" type="publishNewReq">true</demand>
                   <demand id="4" type="ResultDetail"> Req Result </demand>
                </DemandforProcess>
                <DemandforResult/>
            </DemandforNegotiation>
          </input>
```

For example, the target service negotiation request corresponding to Shenlong map service is as follows:

```
          <input>
            <Address>shenlong map address</Address>
            <DemandforServers>
                <demand id="1" pattern="match" isOptional="false">
                     <item>protocol</item>
                     <value>soap</value>
                </demand>
                <demand id="2" pattern="lower" isOptional="false">
                     <item>price</item>
                     <value> 10</value>
                </demand>
                <demand id="3" pattern="higher" isOptional="true">
                     <item>stability</item>
                     <value>98</value>
                </demand>
                <demand id="4" pattern="higher" isOptional="false">
          <item>SecurityLevel</item>
                     <value>2</value>
                </demand>
            </DemandforServers>
            <DemandforNegotiation>
                <DemandforProcess>
                     <demand id="1" type="timeLimit">70</demand>
                     <demand id="2" type="ifHaveNewReqThenFalse">true</demand>
                     <demand id="3" type="publishNewReq">true</demand>
                     <demand id="4" type="ResultDetail">Req Result</demand>
                </DemandforProcess>
                <DemandforResult/>
            </DemandforNegotiation>
          </input>
```

The target service negotiation request corresponding to Shenlong map service is different from that corresponding to Baidu map service in an additional security level requirement.

Step S1403: The service router 35 processes the target service negotiation request and queries the related function devices.

The respective home service router 35 of Baidu map and Shenlong map receives the target service negotiation requests. The following describes the processing of the home router 35 of Shenlong map. The processing of the target service negotiation request corresponding to Baidu map is alike. The service router 35 analyzes the target service negotiation request, finds out the related devices to be queried, and sends service requirement query requests to the related devices. The devices include the service directory 31, registration center 32, bearer network QoS manager 34, and service provider 37. In the embodiment of the present invention, requirements corresponding to the service include protocol, price, stability, and security level, and accordingly, the service router 35 determines it is necessary to query the service directory 31 (protocol), the bearer network QoS manager 34 (stability), and the registration center 32 (price and security level). In weak routing schemes, the device to be queried can also be specified in the target service negotiation request.

The following is a query message sent to the service directory 31. The query message sent to the bearer network QoS manager 34 is alike.

```
          <ServiceID>shenlong map</ServiceID>
            <QuerySet>
            <query type="protocol"/>
          </QuerySet>
```

The result message is as follows:

```
<QueryResult>
            <result type="protocol"> soap </result>
          </QueryResult>
```

The query message sent to the registration center 32 is as follows:

```
          <ServiceID>shenlong map</ServiceID>
            <QuerySet>
            <query type="price"/>
            <query type="securityLevel"/>
          </QuerySet>
```

The result message is as follows:

```
          <QueryResult>
            <result type=" securityLevel" pattern="interface">
 shenlongMap.REQinterface.securityLevel</result>
            <result type=" price">UNKNOW</result>
          </QueryResult>
```

The query message sent to the registration center 32 queries the price and security level, but the security level stored in the registration center 32 is not the security level information but the related requirement query interface of the service provider 37. Price information is not stored in the registration center 32 either. Therefore, the query result is UNKNOW.

With respect to the security level, because the returned information is the query interface, the service router 35 may generate a query request according to the interface information to query the related service port.

The query request message is as follows:

```
          <ServiceID>shenlong map</ServiceID>
          <InterfaceAdress> shenlongMap.REQinterface.securityLevel</InterfaceAdress>
```

The result message is as follows:

```
          <QueryResult>
            <result">3</result>
            <info>This is security Level of shenlong map</info>
            <log>...</log>
          </QueryResult>
```

Step S1404: The service router 35 publishes a new service requirement.

The service router 35 determines there is an unidentifiable new service requirement (price), and publishes the new service requirement according to the negotiation requirement:

```
          <demand id="3" type="publishNewReq">true</demand>
```

One process of publishing a service requirement is that the service router 35 publishes the unidentifiable service requirement to the registration center 32.

```
          <ServiceID>shenlong map</ServiceID>
          <wanted>
            <item type="price"/>
          </wanted >
```

The service provider 37 queries the registration center 32 and knows that the new service requirement published with respect to the service. The service provider 37 obtains the new service requirement, generates a related result, and sends the result to the service router 35.

```
          <ServiceID>shenlong map</ServiceID>
          <matched>
            <item type="price">5<item>
          </matched>
```

The service router 35 updates the result to the registration center 32.

Another process of publishing a service requirement is that the service router 35 queries the requirement notification interface registered by the service on the service registration center 32.

```
          <ServiceID>shenlong map</ServiceID>
```

The result message is as follows:

```
          <ServiceID>shenlong map</ServiceID>
          <REQNotificationInterface>
            shenlongMap.REQNotificationInterface
          </REQNotificationInterface >
```

The service router 35 notifies the requirement notification port of the related requirement information and waits for the returned result.

The typical request message is as follows:

```
          <ServiceID>shenlong map</ServiceID>
          <InterfaceAdress>shenlongMap.REQNotificationInterface</InterfaceAdress>
          <REQ>
            <Type>price<Type>
            <Description>...<Description>
          </REQ>
```

The result message is as follows:

```
          <REQ>
            <item type="price">5</item>
          </REQ>
```

The service router 35 updates the result to the registration center 32.

Step S 1405: The service router 35 returns a target service negotiation result.

According to the negotiation requirement, when there is an unidentifiable service requirement, the service router 35 returns that the service does not meet the service requirements. The returned target service negotiation result includes information of the devices and the values corresponding to the requirements:

```
                     <demand id="2" type="ifHaveNewReqThenFalse">true</demand>
                     <demand id="4" type="ResultDetail">Device and Req</demand>
```

The target service negotiation result returned by Shenlong map is: the target service does not meet the service requirements, there is an unidentifiable service requirement, the related requirement is published, and the result values corresponding to the requirements are listed.

```
          <output>
            <Result>102(false/ publish new requirement/return immediately) </Result>
            <Detail>
                <demand>
                     <item id="1" type="protocol">soap</item>
                     <item id="2" type="price">5</item>
                     <item id="3" type="stability">99</item>
                     <item id="4" type="SecurityLevel">UNKNOW</item>
                </demand>
            </Detail>
            <Log>time=40;Device=Service Quality,Service Catalog,Service
 Register, S ervice;</Lo g>
          </output>
```

If it is set in the negotiation requirement that to publish the new requirement and wait for the feedback of the service provider 37, the service router 35 waits for the return values of the service provider 37 and not return the negotiation result until the time specified by the negotiation requirement expires. If within the time, the service returns that the service requirement is met, the result may be:

```
                <Result>201(success/ publish new requirement/waiting)</Result>
          or
                <Result>202(false/ publish new requirement/waiting)</Result>
```

The target service negotiation result returned by Baidu map is the target service meets the requirements; and all requirements are identified.

```
          <output>
            <Result> 101(success) </Result>
            <Detail>
                <demand>
                     <item id="1" type="protocol">soap</item>
                     <item id="2" type="price">7</item>
                     <item id="3" type="stability">99</item>
                </demand>
            </Detail>
            <Log>time=50;Device=Service Quality,Service Catalog,Service
 Register;</Log>
          </output>
```

Step S1406: The negotiation agent 36 processes the target service negotiation results and generates a service negotiation result.

The negotiation agent 36 determines that Baidu map meets the service requirements while Shenlong map does not, and returns Baidu map as the final negotiation result. If both candidate services meet the requirements, the negotiation agent 36 selects the service of a higher priority according to the priority information specified in the negotiation requirement or select the one that responds more quickly.

```
          <Output>
          <Candidate>
          <address>baidu map address</address>
          </Candidate>
          <Log>time=40; suitable candidates=1; </Log>
          </output>
```

The service negotiation method, system, and device provided in the embodiments of the present invention enable a service network to support service negotiation under multiple service requirements according to the characteristics of the service routers in the service network. Thus, the present invention meets the needs of service interactions and satisfies the requirements of the service negotiation requester, and enables the service network to negotiate the most proper service, and thereby, increases the success rate of service negotiation and enhances user satisfaction.

Because services are diversified, service requirements are diversified. In the embodiments of the present invention, the service router 35 publishes service requirements. Therefore" service requirements that are unidentifiable at the beginning can be detected and identified later, so that service negotiation need not be limited to specific service requirements.

In addition to the above described implementation, the functions of the negotiation agent may be integrated into the service combination engine to make the engine become an enhanced service combination engine, which can implement negotiation of invoked sub-services in the combination process.

Furthermore, the functions of the negotiation agent may be integrated into a service router in the existing service network to make the router become an enhanced service router, so as to support negotiation of services under intelligent routing or other circumstances. In this case, the enhanced service router that integrates the functions of the negotiation agent plays the role of the negotiation agent in the embodiments of the present invention to interact with other service routers so as to implement the solution of the embodiments of the present invention.

In an embodiment of the present invention, the functions of the registration center may be integrated into a service router in the existing service network. In this case, information previously registered with the registration center is registered with the service router that integrates the registration center functions which maintain the information. The service router becomes an enhanced service router which registers, queries, updates, and maintains information instead of the registration center. The interactions between the service router and the registration center are implemented inside the service router.

In an embodiment of the present invention, the information managed by the registration center and the information managed by the service directory may be integrated or interchanged. In the existing service network, the registration center maintains the service dynamic information and certain nonfunctional information. The nonfunctional information includes the state and service physical network address information of services. The service directory maintains the service function information. This information includes interface description information and interaction protocol information.

When a network is deployed, the information managed by the registration center and the information managed by the service directory may be integrated or interchanged in view of certain business considerations (for example, reduction of costs). In this case, when the service router or negotiation agent determines the function devices to be queried according to the service requirements, changes should be made accordingly. For example, for some service requirements originally to query the service directory, the service router or negotiation agent may need to query the registration center, and for other service requirements originally to query the registration center, the service router or negotiation agent may need to query the service directory.

In the embodiments of the present invention, for reasons of network deployment and device compatibility, when the processing capability of the service router is limited, the weak routing scheme may be adopted. Specifically:

The service router does not process the query result corresponding to any service requirement but routes the query result of the service requirement directly to the negotiation agent, which performs the negotiation process. In this case, the following changes are made in the embodiments of the present invention: the ingress message of the service router is changed to exclude the requirement corresponding to the negotiation result; the egress message of the service router is changed to be not the negotiation result but the values corresponding to the service requirements.

In the embodiments of the present invention, the service router performs the query and judgment corresponding to all requirements on a service. Because of the special deployment of the service network (for example, the service router probably has no access to the service directory), a substitute solution is provided, where the negotiation agent takes the place of the service router to perform the query and judgment (for example, the negotiation agent queries the service directory). In this case, the service router only has the basic function of message routing and other functions of the service router are all processed by the negotiation agent. Specifically, the negotiation agent obtains the service negotiation request that contains multiple services, obtains the service requirement information of the multiple services according to the service negotiation request, and obtains the requirement processing result in response to the service requirement information of the multiple services. Then, the negotiation agent selects a target service according to the requirement processing result, generates a service negotiation result corresponding to the service negotiation result, and sends the service negotiation result to the service provider.

From the foregoing description of the embodiments of the present invention, those skilled in the art understand that the invention can be implemented through hardware or through software on a necessary universal hardware platform. Based on such understanding, the technical solution of the present invention may be reflected in the form of a software product, which is stored in a non-volatile storage medium, such as a Compact Disk-Read Only Memory (CD-ROM), a USB flash disk, and a movable hard disk. The software product includes instructions that enable a computer device (a personal computer, a server, or a network device) to execute the method in the embodiments of the present invention.

Those skilled in the art understand that the accompanying drawings illustrate the preferred embodiments of the present invention and that the modules or procedures in the accompanying drawing may be probably not necessary in the invention.

Those skilled in the art understand the modules of a device in the embodiments of the present invention may be placed in the device as described in the embodiments of the present invention or placed in one or more devices other than the device in the embodiments of the present invention. The modules in the embodiments may be combined into one module or further decomposed into several sub-modules.

The sequence numbers of the embodiments are only for description purposes and do not imply the superiority or inferiority of the embodiments.

Although the present invention is described through some exemplary embodiments, the present invention is not limited to such embodiments. It is apparent that those skilled in the art can make various modifications and variations to the invention without departing from the spirit and scope of the present invention. The invention is intended to cover the modifications and variations provided that they fall within the scope of protection defined by the claims or their equivalents.

## Claims

1. A service negotiation method, comprising:
obtaining a service negotiation request that contains multiple services;
obtaining a requirement processing result of the multiple services according to the service negotiation request; and
selecting a target service according to the requirement processing result, generating a service negotiation result corresponding to the service negotiation request, and returning the service negotiation result.

2. The service negotiation method of claim 1, wherein the step of obtaining the requirement processing result of the multiple services according to the service negotiation request comprises:
sending a requirement query request to one or more than one function device that maintains service requirement information of the multiple services according to the service negotiation request; and
receiving a requirement processing result returned by the one or more than one function device in response to the requirement query request.

3. The service negotiation method of claim 2, wherein the step of sending the requirement query request to the one or more than one function device that maintains the service requirement information of the multiple services according to the service negotiation request comprises:
determining the one or more than one function device that needs to perform query and contains the service requirement information of the multiple services, according to the service negotiation request; and
sending the requirement query request to the one or more than one function device.

4. The service negotiation method of claim 1 or 2, wherein the step of selecting the target service according to the requirement processing result comprises:
processing the requirement processing result according to the service negotiation request or a policy preset by a system to select the target service.

5. The service negotiation method of claim 3, wherein the step of sending the requirement query request to the function device comprises:
querying Quality of Service (QoS) information of the multiple services;
querying functional information of the multiple services; and/or
querying service dynamic information of the multiple services.

6. The service negotiation method of claim 1, wherein the step of obtaining the requirement processing result of the multiple services according to the service negotiation request comprises:
sending a requirement query request to a home service router of the multiple services; and
receiving a requirement processing result returned by the home service router of the multiple services in response to the requirement query request.

7. The service negotiation method of claim 6, wherein the home service router of the multiple services forward only the requirement query request to function devices and receive and forward the requirement query result returned by the function devices in response to the requirement query request.

8. The service negotiation method of claim 7, wherein, before the home service router of the multiple services forwards only the requirement query request to the function devices,
the home service router of the multiple services determines one or more than one function device that needs to perform query and contains service requirement information of the multiple services in response to the requirement query request.

9. The service negotiation method of claim 8, wherein the step of forwarding only the requirement query request to the function devices comprises:
querying Quality of Service (QoS) information of the multiple services;
querying functional information of the multiple services; and/or
querying service dynamic information of the multiple services.

10. The service negotiation method of claim 3 or 8, further comprising:
determining there is an unidentifiable service requirement according to the requirement processing result returned by the function device and publishing the unidentifiable service requirement.

11. The service negotiation method of claim 1, wherein the step of obtaining the requirement processing result of the multiple services according to the service negotiation request comprises:
requesting service requirement information of the multiple services from a home service router of the multiple services, so that the home service router of the multiple services returns a requirement processing result corresponding to the service requirement information.

12. The service negotiation method of claim 11, wherein the step of returning the requirement processing result corresponding to the service requirement information comprises:
determining, by the home service router of the multiple services, a function device to be queried in response to the service requirement information of the multiple services and sending a requirement query request that carries the service requirement information to the function device;
receiving a requirement processing result returned by the function device in response to the requirement query request; and
sending the requirement processing result to a negotiation agent.

13. The service negotiation method of claim 11, wherein the step of requesting the service requirement information of the multiple services from the home service router of the multiple services comprises:
obtaining, by the negotiation agent, a target service to be processed from the service negotiation request; and
sending a target service negotiation request to the home service router of the multiple services, and requesting service requirement information of the target service to be processed.

14. The service negotiation method of claim 13, wherein:
the home service router of the multiple services comprises a home service router of the target service to be processed; and
the step of returning the requirement processing result corresponding to the service requirement information by the home service router of the multiple services comprises:
determining, by the home service router of the target service to be processed, a function device to be queried in response to the service requirement information of the target service and sending a requirement query request to the function device;
receiving a requirement processing result returned by the function device in response to the requirement query request;
generating a target service negotiation result corresponding to the target service negotiation request according to the requirement processing result; and
sending the target service negotiation result to the negotiation agent.

15. The service negotiation method of claim 14, wherein the step of selecting the target service and generating the service negotiation result corresponding to the service negotiation request comprises:
selecting, by the negotiation agent, a target service according to the target service negotiation result and generating a service negotiation result corresponding to the service negotiation request.

16. The service negotiation method of claim 12 or 14, wherein the step of sending the requirement query request to the function device comprises:
sending, by the home service router of the multiple services, a requirement query request to a bearer network Quality of Service (QoS) manager to query QoS information;
sending a requirement query request to a service directory to query service function information; and/or
sending a requirement query request to a registration center to query service dynamic information.

17. The service negotiation method of claim 16, wherein:
the service dynamic information comprises specific numeric values corresponding to the service requirements or information for querying ports corresponding to the service requirements; and
when the returned service dynamic information is the information for querying ports corresponding to the service requirements,
the home service router of the multiple services uses a related query port of a service provider to query the specific numeric values corresponding to the service requirements according to the information for querying ports.

18. The service negotiation method of claim 12 or 14, further comprising:
determining, by the home service router of the multiple services, there is an unidentifiable service requirement according to the requirement processing result returned by the function device, and publishing the unidentifiable service requirement.

19. The service negotiation method of claim 1, 6, or 11, wherein the service negotiation request comprises one or more of the following information items:
service network addresses of the multiple services, service identifiers of the multiple services, service requirement information of the multiple services, a requirement corresponding to the selection of the target service, and a requirement corresponding to the negotiation process.

20. The service negotiation method of claim 1, 6, or 11, wherein the service negotiation result comprises one or more of the following information items:
a service network address of the target service, a service identifier of the target service, and a negotiation log.

21. The service negotiation method of claim 13, wherein the target service negotiation request comprises one or more of the following information items:
a service network address of the target service to be processed, a service identifier of the target service to be processed, service requirement information of the target service to be processed, a requirement corresponding to the processing of the target service negotiation result, and a requirement corresponding to the target negotiation process.

22. The service negotiation method of claim 14, wherein the target service negotiation result comprises one or more of the following information items:
negotiation result ID, a negotiation log, and specific numeric values corresponding to the service requirements.

23. The service negotiation method of claim 16, wherein the registration center may be integrated into a service router and functions implemented by the registration center may be processed by the service router.

24. The service negotiation method of claim 1, 2, 3, 6, or 8, wherein the requirement processing result is a query result corresponding to the service requirement information of the multiple services.

25. A service requirement publishing method, comprising:
obtaining service requirement information of a target service and determining there is an unidentifiable service requirement in response to the service requirement information; and publishing the unidentifiable service requirement.

26. The service requirement publishing method of claim 25, wherein the step of determining there is an unidentifiable service requirement in response to the service requirement information comprises:
obtaining supportable service requirement information and determining there is an unidentifiable service requirement according to the query result; or
determining a function device to be queried in response to the service requirement information, sending a requirement query request that carries the service requirement information to the determined function device, receiving a requirement query result retuned by the determined function device in response to the requirement query request, and determining there is an unidentifiable service requirement according to the requirement query result.

27. The service requirement publishing method of claim 25, wherein the step of publishing the unidentifiable service requirement comprises:
publishing the unidentifiable service requirement to a home service router of the target service or a registration center or a service directory corresponding to the service router, and obtaining, by a service provider, the unidentifiable service requirement of the target service;
receiving a result sent by the service provider, wherein the result is generated by the service provider in response to the unidentifiable service requirements; and
updating the result to the service router, or the registration center, or the service directory.

28. The service requirement publishing method of claim 27, wherein the step of publishing the unidentifiable service requirements comprises:
querying the registration center or service directory to obtain a requirement notification port provided when a service is registered, and notifying the service provider of the unidentifiable service requirements by using the requirement notification port;
receiving a result sent by the service provider, wherein the result is generated by the service provider in response to the unidentifiable service requirements; and
updating the result to the service router, or the registration center, or the service directory.

29. The service requirement publishing method of claim 27 or 28, wherein the result comprises: specific numeric results corresponding to the unidentifiable service requirements or information for querying ports corresponding to the unidentifiable service requirements.

30. A service negotiation system, comprising:
a negotiation agent, configured to: obtain a service negotiation request that contains multiple services, obtain a requirement processing result of the multiple services according to the service negotiation request, select a target service according to the requirement processing result, generate a service negotiation result in response to the service negotiation request, and return the service negotiation result.

31. The service negotiation system of claim 30, further comprising:
a service router, configured to: receive and forward a requirement query request sent by the negotiation agent, and receive and forward the requirement processing result to the negotiation agent.

32. The service negotiation system of claim 30, further comprising:
a service router, configured to: receive a request of the negotiation agent, and return a requirement processing result corresponding to the service requirement information of the multiple services to the negotiation agent.

33. The service negotiation system of claim 30, further comprising one or more of the following devices:
a service directory, configured to maintain service function information which comprises service provider information, service category information, or service interface description information;
a registration center, configured to maintain service dynamic information which comprises service identifiers or service network addresses, and physical network addresses corresponding to the service identifiers or service network addresses;
a service combination engine, configured to initiate the service negotiation request; and
a bearer network Quality of Service (QoS) manager, configured to manage QoS of a lower layer bearer network, comprising checking one or multiple of the following items: connectivity state, transmission rate, delay, and jitter at a physical link layer.

34. The service negotiation system of claim 30, wherein the negotiation agent is an independent function entity or is integrated into a service combination engine, or integrated into a service router.

35. The service negotiation system of claim 33, wherein the registration center is an independent function entity or is integrated into a service router.

36. The service negotiation system of claim 31, wherein the service router routes service layer messages and may be integrated into the negotiation agent.

37. A negotiation agent, comprising:
a negotiation request analyzing unit, configured to: obtain a service negotiation request that contains multiple services, and analyze the request to obtain a target service to be processed and a negotiation requirement;
a target service negotiating unit, configured to: request service requirement information of the target service from a home service router of the target service to be processed, and receive a requirement processing result returned by the home service router of the target service in response to the service requirement information of the target service; and
a negotiation result generating unit, configured to: select a target service according to the requirement processing result, generate a service negotiation result corresponding to the service negotiation request, and return the service negotiation result.

38. The negotiation agent of claim 37, further comprising:
a negotiation process controlling unit, configured to generate a target service negotiation request according to the negotiation requirement in the service negotiation request and the target service to be processed obtained by the negotiation request analyzing unit.

39. The negotiation agent of claim 37, further comprising:
a negotiation requirement maintaining unit, configured to maintain and manage negotiation requirement.

40. A service router, comprising:
a negotiation processing system, configured to: receive and process a service negotiation request of a target service, and return a negotiation result in response to the service negotiation request.

41. The service router of claim 40, wherein the negotiation processing system further comprises:
a negotiation processing unit, configured to: receive a request sent by a negotiation agent, and control a negotiation process on the service router;
a service requirement analyzing unit, configured to: receive a request sent by the negotiation processing unit, analyze service requirement information in the request, determine function devices to be queried in response to the service requirement information, and trigger the negotiation processing unit to send a requirement query request that carries the service requirement information; and
a requirement querying unit, configured to: receive the requirement query request sent by the negotiation processing unit, send the requirement query request to the function devices, receive a requirement query result returned by the function devices, and trigger the negotiation processing unit to send the requirement processing result to the negotiation agent.

42. The service router of claim 41, wherein:
the requirement querying unit is further configured to: determine there are unidentifiable service requirements according to the requirement processing result, and notify the negotiation processing unit of the determined unidentifiable service requirements;
the negotiation processing unit is further configured to send a new service requirement publishing request; and
the negotiation processing system further comprises:
a requirement publication receiving unit, configured to: receive the new service requirement publishing request sent by the negotiation processing unit, and publish the unidentifiable service requirements.

43. A service combination engine, comprising:
a negotiation agent, configured to: obtain a service negotiation request that contains multiple services, obtain a requirement processing result of the multiple services according to the service negotiation request, select a target service according to the requirement processing result, generate a service negotiation result in response to the service negotiation request, and return the service negotiation result.

44. A service router, comprising:
a negotiation agent, configured to: obtain a service negotiation request that contains multiple services, obtain a requirement processing result of the multiple services according to the service negotiation request, select a target service according to the requirement processing result, generate a service negotiation result in response to the service negotiation request, and return the service negotiation result.
